(19) Europäisches Patentamt
European Patent Office
Office européen des brevets

(11) **EP 3 318 851 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(51) Int Cl.:
***G01G 19/00*** *(2006.01)*

(21) Anmeldenummer: **17198399.2**

(22) Anmeldetag: **25.10.2017**

(54) **VERFAHREN ZUM STEUERN EINER DYNAMISCHEN WAAGE FÜR AUF DER SEITE LIEGENDE FLACHE GÜTER UND ANORDNUNG ZUR DURCHFÜHRUNG DES VERFAHRENS**

METHOD FOR CONTROLLING A DYNAMIC SCALE FOR FLAT GOODS TRANSPORTED LYING ON THEIR SIDE, AND ARRANGEMENT FOR IMPLEMENTATION OF THE METHOD

PROCÉDÉ DE COMMANDE D'UNE BASCULE DYNAMIQUE POUR PRODUITS PLATS TRANSPORTÉS DE MANIÈRE À ÊTRE POSÉS SUR LE CÔTÉ ET DISPOSITIF DE MISE EN OEUVRE DUDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.11.2016 DE 202016106125 U**
**15.12.2016 DE 102016124471**

(43) Veröffentlichungstag der Anmeldung:
**09.05.2018 Patentblatt 2018/19**

(73) Patentinhaber: **Francotyp-Postalia GmbH**
**13089 Berlin (DE)**

(72) Erfinder:
• **BAUM, Volker**
**13189 Berlin (DE)**
• **GESERICH, Frank**
**16515 Friedrichsthal (DE)**

(56) Entgegenhaltungen:
**US-A1- 2001 015 291**

**Beschreibung**

Die Erfindung betrifft ein Verfahren zum Steuern einer dynamischen Waage für auf der Seite liegende flache Güter und eine Anordnung zur Durchführung des Verfahrens gemäß den Oberbegriffen der Patentansprüche 1 und 10. Die auf der Seite liegend transportierten flachen Güter sind beispielsweise Poststücke, wie kuvertierte Briefe oder Postkarten, aber auch ein anderes flaches Gut soll nicht ausgeschlossen werden. Eine solche dynamische Waage wird in einem Gutverarbeitungssystem, beispielsweise als modulare Station einer Poststraße eines Frankiersystems eingesetzt.

Die Poststraße eines Frankiersystems besteht in üblicher Weise aus einer Vielzahl von einzelnen aneinandergereihten Poststückverarbeitungsstationen. Eine Anlegestation ist poststromaufwärts der Vereinzelungsstation, d.h. oft am Anfang der Poststraße aufgestellt und dient zum Anlegen von einzelnen oder gestapelten Poststücken an die Vereinzelungsstation, welche den Stapel vereinzelt. Die vereinzelten Poststücke werden über die dynamische Waage einer Frankiermaschine zugeführt und dann in einer Ablagestation abgelegt.

Eine dynamische Waage des Frankiersystems Jetmail® war schon aus dem europäischen Patent EP 974 819 B1 vorbekannt. Der dynamischen Waage werden Poststücke (Briefe), die auf der Kante stehend transportiert werden, zugeführt. Auf einer Wiegeschale der Waage soll sich der zu wiegende Brief vollständig und allein befinden, um eine ausreichend genaue und fehlerfreie Gewichtsmessung zu erzielen. Die Länge der Wiegeschale wird dabei von der Transportgeschwindigkeit, dem längsten zu wiegenden Brief und einer zusätzlichen Messstrecke bestimmt. Aber die Lücke zwischen den längsten Briefen wird so groß, dass sich kein hoher Briefdurchsatz erzielen lässt. Der Durchsatz wird an einem Standardbrief orientiert, denn die Lücke ist dann kleiner. Somit werden aber nur 50 lpm (letters per minutes) erreicht. Der Durchsatz lässt sich zwar theoretisch durch eine Erhöhung der Transportgeschwindigkeit der Briefe durch eine entsprechend angesteuerte Transporteinheit der dynamischen Waage weiter steigern, doch muss die Transportgeschwindigkeit auch an die übrigen Poststückverarbeitungsstationen des gesamten Frankiersystems angepasst sein. Es wäre nachteilig, wenn die Mehrzahl der Stationen bzw. Module des gesamten Frankiersystems diesbezüglich überarbeitet werden müssen.

Aus dem europäischen Patent EP 1014050 B1 ist ein Verfahren und Anordnung zum Steuern einer dynamischen Waage bekannt, die zwei Betriebsmodi aufweist. Im dynamischen Betriebsmodus ist vor einem Beginn eines Messzeitbereichs eine Drehzahlregelung aktiv, die jedoch während des Messzeitbereichs deaktiviert wird und erst bei einem im Auslauf der Waage befindlichen Poststück wieder aktiviert wird. Bei einem nicht zu starken Antriebsmotor wirken Reibungswider-stände auf das mindestens eine Transportband der Transportvorrichtung ein, was die anfängliche Motordrehzahl gerade bei schweren Poststücken innerhalb des Messzeitbereichs einbrechen lässt. Aus dieser passiven Bremsung auf eine geringere Transportgeschwindigkeit resultiert eine nur geringe Messzeitvergrößerung für großformatige Poststücke, die manchmal nicht ausreichend ist, um einen gültigen Messwert zu erhalten. Deshalb wird nach einem Anhalten des Transports des transportierten flachen Guts letzteres wieder auf die Waageschale zurück transportiert, wieder gestoppt und auf einen statischen Betriebsmodus der Waage umgeschaltet und dann aus der Waage heraus transportiert. Der Transportmechanismus muss den Transport in beide Richtungen unterstützen, außerdem ist der Zeitbedarf für die Rückhol-Prozedur relativ hoch. Aufgrund der passiven Bremsung ist nicht für alle Waagen eindeutig reproduzierbar, in welcher Art und Weise die Poststücke von ihrem Format und/oder Gewicht abhängig behandelt werden.

Aus dem europäischen Patent EP 1014051 B1 ist ein Verfahren und Anordnung zum Steuern einer dynamischen Waage bekannt. Die Anordnung offenbart 2 Sensoren S1 und S2, je einer am Eingang bzw. Ausgang der dynamischen Waage. Ein Wiegemodus ist vor dem Wägen aus einer Anzahl von unterschied-lichen Wiegemodi manuell auswählbar. Eine zu hoch gewählte Transportgeschwindigkeit kann zu einem ungültigen Messergebnis führen. Während des dynamischen Wiegens kann eine Umschaltung der Transportgeschwindigkeit auf einen niedrigeren vorbestimmten Wert zum und ggf. auf null zum statischen Wiegen erfolgen. Dabei tritt ausgehend von einer hohen Transportgeschwindigkeit bei einem Anhalten des Transports ein ungewollter Weitertransport des transportierten flachen Guts auf. Wegen der gespeicherten Bewegungsenergie des transportierten flachen Guts und einer im Antriebsmotor gespeicherten Energie ist ein plötzliches Anhalten jedoch nicht möglich. Damit eine Gewichtsmessung nicht ungenau wird, muss ein beabsichtigtes statisches Wiegen abgebrochen werden, falls der Schwerpunkt des flachen Guts zu weit vom Schwerpunkt der Wageschale entfernt ist, wenn das flache Gut letztendlich zu spät zum Stehen kommt. Infolge dessen muss das flache Gut ein Wegstück zurück transportiert werden. Bei Rücktransport geht Verarbeitungszeit verloren, die zum Wägen genutzt werden könnte.

Aus dem europäischen Patent EP 1189041 B1 ist eine dynamische Waage mit einer im Transportweg der Waage vorgelagert angeordneten Verarbeitungsstation bekannt, wobei in der Station eine Vielzahl von Sensoren zur Dimensionsbestimmung eines Poststückes angeordnet ist. Es ist vorgesehen, dass eine automatische Umschaltung in einen zweiten Betriebsmodus zum halbdynamischen Betrieb der Waage mit statischen Wiegen erfolgt, wobei die Umschaltung in Abhängigkeit vom Ergebnis einer Bestimmung der Dimensionen des nachfolgend an die Waage gelieferten Poststückes in einer im Poststrom aufwärts angeordneten ersten Verarbeitungsstation erfolgt. Ein Zurücktransport des Poststückes ist unnötig, wenn es auf der Waageschale zwecks eines halbdynamischen Wiegens nicht zu weit transportiert wird. In dem oben genannten Patent werden jedoch die dafür erforderlichen Mittel nicht mitgeteilt. Nachteilig ist, insbesondere wenn die Verarbeitungsstation in einer Poststraße ohne dynamische Waage eingesetzt werden soll, dass entweder alle Verarbeitungsstationen mit einer Vielzahl von Sensoren zur Dimensionsbestimmung eines Poststückes ausgestattet werden müssten oder zwei verschiedene Typen an Verarbeitungsstationen produziert werden müssten, was in jedem Fall den materiellen, finanziellen und organisatorischen Aufwand für eine solche Verarbeitungsstation erhöht.

Aus dem europäischen Patent EP EP1116941 B1 ist eine weitere dynamische Waage mit einer im Transportweg der Waage angeordneten Verarbeitungsstation bekannt.

Eine dynamische Waage des Frankiersystems Centormail® ist aus dem deutschen Patent DE 10 2011 100 176 B4 bekannt und weist zwei kaskadiert angeordnete Wiegeeinheiten auf, durch die ein auf der Kante stehender Brief mit einer Transportgeschwindigkeit von 680 mm/s hindurchläuft. Damit werden bei Standardbriefen bis zu 90 lpm erreicht. Außerdem können alle weiteren Briefformate dynamisch verarbeitet werden. Allerdings ist der materielle und finanzielle Aufwand verhältnismäßig groß.

Aus der deutschen Patentanmeldung DE 102010009431 A1 ist eine schnelle dynamische Waage und ein Verfahren zur Steuerung der schnellen dynamischen Waage bekannt, die neben einer Wiegeeinheit mit einer für das Wiegen von Standardbriefen wirksam verkürzten Länge auch eine schaltbare Abzugsvorrichtung für auf der Kante stehend transportierte Stückgüter, wie kuvertierte Briefe, aufweist. Standardbriefe sind diejenigen Briefe der deutschen PostAG mit einem Format von (90 mm bis 125 mm x 140 mm bis 235 mm) und machen den größten Anteil am Briefaufkommen aus. Unter dem Begriff Standardbrief sollen nachfolgend die Formate C6 lang (235 mm Länge) nach DIN und US10 (241 mm Länge) nach US-Norm verstanden werden. Die Wiegeeinheit besteht aus einer Wiegezelle, einer Wiegeschale mit einem Transportmechanismus und einem ersten Motor zum Antrieb desselben, wobei der Transportmechanismus mit dem Motor auf der Wiegezelle angeordnet ist, wodurch die Wiegezelle mit einer Vorlast belastet wird, mit einem ersten Sensor, der über der Achse der ersten Umlenkrolle des Transportmechanismus am Beginn der Wiegeeinheit angeordnet ist und der ein erstes Signal an eine Steuereinheit abgibt, welche den Wägevorgang für ein Stückgut startet. Ein zweiter Sensor ist in Transportrichtung in einer Position nahe der Mitte der Wiegeschale angeordnet und gibt ein zweites Signal an die Steuereinheit ab, welche eine Mitteilung erzeugt, dass ein auf das Stückgut folgendes Stückgut zugeführt werden kann. Von einer Steuereinheit werden drei Motoren angesteuert und fünf Sensoren abgefragt, um die Position des Stückguts zu bestimmen. Die Waage benötigt einen hohen materiellen Aufwand und das komplizierte Steuerungsverfahren ist nachteilig. Das Verfahren umfasst auch dann ein a) Hinzuschalten der Abzugsvorrichtung, wenn der Wägevorgang nicht beendet ist, b) Stoppen des Transports des Stückguts in der Waage, c) Zurücktransport des Stückguts auf die Wiegeeinheit, d) Statisches Wägen des Stückguts, e) Weitersteuerung der Wiegeeinheit und der Abzugsvorrichtung zum Auswurf des Stückguts.

Bei einer dynamischen Waage des Frankiersystems CentorMail™ wird während des Transportes des Briefes mit 680 mm/s permanent versucht, ein stabiles Gewicht für diesen Brief zu ermitteln. Gelingt das nicht, bevor der Brief den Wiegebereich verlässt, was durch Schließen der Auslauflichtschranke signalisiert wird, werden die folgenden Schritte ausgeführt:

1. der Transport wird gestoppt,

2. der Transport wird in umgekehrter Richtung gestartet,

3. der Transport wird wieder gestoppt, sobald der Brief wieder zurück auf den Wiegebereich transportiert wurde (Auslaufsensor wird wieder frei),

4. eine statische Wägung wird vorgenommen,

5. der Transport wird wieder in der Transportrichtung mit Systemgeschwindigkeit gestartet um den Brief in das nachfolgende Gerät zu transportieren.

In nachteiliger Weise muss der Transportmechanismus einen Transport in beide Richtungen unterstützen, außerdem ist der Zeitbedarf für die Rückhol-Prozedur relativ hoch.

Eine Aufgabe bestand deshalb darin, ein Verfahren und eine Anordnung zum Steuern einer dynamischen Waage für auf der Seite liegenden flachen Guts zu entwickeln, welche die o.g. Nachteile nicht aufweisen. Die dynamische Waage soll möglichst einfach aufgebaut und kostengünstig herstellbar sein und ohne einen Rücktransport des flachen Guts auskommen, so dass die durch die dynamische Waage benötigte Gutverarbeitungszeit minimiert und dadurch den Durchsatz an flachen Gütern erhöht wird. Das Verfahren soll abhängig von gültigen Gewichtsmesswerten für alle flachen Güter unabhängig von ihrem Format reproduzierbar sein. Es soll eine dynamische Waage mit nur einer Wägezelle und mit einer Abzugsvorrichtung für auf der Seite liegend transportierte flache Güter geschaffen und die Anzahl an Sensoren und Motoren soll minimiert werden, um ein einfaches und gleiches Steuerungsverfahren der dynamischen Waage für alle Briefformate von der Postkarte mit 140 mm Länge bis zum B4 Format mit 353 mm Länge sowie für unterschiedliche Briefdicken zu gestatten.

Die Aufgabe wird mit den Merkmalen eines Verfahrens zum Steuern einer dynamischen Waage für auf der Seite liegenden flachen Guts, nach dem Patentanspruch 1 und mit einer Anordnung zur Durchführung des Verfahrens, nach dem Patentanspruch 10 gelöst.

Das Verfahren zum Steuern einer dynamischen Waage für auf der Seite liegende flache Güter, umfasst ein Steuern des Transports der flachen Güter und weist eine fortlaufende Zählung von Encoderimpulsen sowie eine Gewichtsmessung eines bewegten flachen Gutes auf, welche gestartet wird, wenn die Hinterkante des flachen Gutes einen ersten Sensor erreicht. Ein erster Zählstand W1 des Zählers wird gespeichert, wenn die Vorderkante eines flachen Gutes einen zweiten Sensor erreicht aber kein gültiges Gewichtsmessergebnis vorliegt. Dann ist ein Schritt des Verfahrens erreicht, bei welchen eine Gewichtsmessung mit einer stufenweise verringerten Transportgeschwindigkeit erfolgt, wobei nach einer Abstufung der Transportgeschwindigkeit des flachen Gutes eine anschließende Gewichtsmessung mit einer nächst niedrigen Transportgeschwindigkeit vorgenommen wird, wobei dann der aktuelle Zählerstand abgefragt wird, wenn weder ein gültiges Gewichtsmessergebnis noch festgestellt werden kann, dass die Hinterkante des flachen Gutes den ersten Sensor erreicht, obwohl die Vorderkante eines flachen Gutes einen zweiten Sensor erreicht hat, sowie Überprüfung, ob der aktuelle Zählerstand einer Summe aus dem gespeicherten Zählerstand und einem vorbestimmten Zählwert entspricht. Nach der Überprüfung erfolgt eine Wiederholung der Abfragen und Subschritte des Schrittes, solange der aktuelle Zählerstand die Summe noch nicht erreicht und mit einer weiteren Abstufung der Transportgeschwindigkeit des flachen Gutes und Gültigkeitprüfung des Gewichtsmessergebnises in mindesten einem weiteren Schritt, wenn der aktuelle Zählerstand die Summe erreicht.

Das Verfahren zum Steuern einer dynamischen Waage für auf der Seite liegende flache Güter, umfasst im Einzelnen die folgenden Schritte:

a) Bereitstellen eines Wiegetellers, der eine Transportvorrichtung für ein auf der Seite liegend zu transportierendes flaches Gut aufweist, das während des Wiegens in Transportrichtung x eines kartesischen Koordinatensystems transportiert wird, und Bereitstellen eines Encoders und eines Zählers zum Zählen von Encoderimpulsen in Zeitintervallen während des Antriebes der Transportvorrichtung,

b) Bereitstellen einer Abzugsvorrichtung zum Abziehen des flachen Guts von dem Wiegeteller,

c) Bereitstellen eines ersten Sensors in einem ersten Abschnitt des Zuführdecks im Einlauf und von Sensoren im Auslauf der dynamischen Waage, zum Erfassen der Position von einem flachen Gut,

d) Bereitstellen einer Abdeckung für einen Breitensensor, der zwischen dem Wiegeteller und der Abzugsvorrichtung einen dritten Abschnitt des Zuführdecks bildet, der es gestattet, den Wiegeteller in einem zweiten Abschnitt des Zuführdecks zu verkürzen,

e) Bereitstellen einer Steuereinheit zum Erfassen von Sensorsignalen und Ausgabe von Steuersignalen, vorgesehen zum

    i) Erfassen, dass die Vorderkante des flachen Guts eine Position eines ersten Sensor erreicht, wobei die Position auf einem Transportweg gutstromaufwärts unmittelbar an einer Kante des Wiegetellers liegt,

    ii) Erfassen, dass die Hinterkante des flachen Guts die Position des ersten Sensor erreicht, wobei die Position auf einem Transportweg gutstromaufwärts unmittelbar an einer Kante des Wiegetellers liegt,

    iii) Erfassen, dass die Vorderkante des flachen Guts eine Position eines zweiten Sensor erreicht, wobei die Position auf einem Transportweg gutstromabwärts unmittelbar an einer Kante des Wiegetellers liegt und

    iv) Erfassen, dass die Vorderkante des flachen Guts eine Position eines dritten Sensor erreicht, wobei die Position auf einem Transportweg gutstromabwärts unmittelbar an einer Kante des Wiegetellers liegt sowie

    v) Ansteuern eines ersten Motors der Transportvorrichtung, um flaches Gut mit einer ersten Transportgeschwindigkeit entlang des Transportweges zu transportieren, wobei der Betrieb des ersten Motors mit dem Encoder überwacht wird,

    vi) Zählen von Encoderimpulsen in Zeitintervallen während des Antriebes der Transportvorrichtung für ein flaches Gut,

vii) Wiegen und Auswerten des Gewichtsmessergebnisses, wobei bei einem gültigen Gewichtsmessergebnis der erste Motor der Transportvorrichtung angesteuert wird, um die erste Transportgeschwindigkeit konstant zu halten, wobei bei einem Feststellen eines ungültigen Gewichtsmessergebnis ein erster Zählstand des Zählers gespeichert wird,

viii) Gewichtsmessung bei verringerter Transportgeschwindigkeit bei einem ungültigen Gewichtsmessergebnis, wobei der erste Motor der Transportvorrichtung angesteuert wird, um die erste Transportgeschwindigkeit um mindestens eine Stufe auf mindestens eine zweite Transportgeschwindigkeit zu verringern und um diese anschließend konstant zu halten, und Fortsetzung des Gewichtsmessung des bewegten flachen Guts,

ix) Überprüfen, ob ein gültiges Gewichtsmessergebnis vorliegt, nach dem die Hinterkante des flachen Guts die Position des ersten Sensor erreicht hat, wobei der aktuelle Zählerstand des Zählers abgefragt wird, wenn weder ein gültiges Gewichtsmessergebnis vorliegt, noch die Hinterkante des flachen Guts die Position des ersten Sensor erreicht hat,

x) Ermittlung ob der aktuelle Zählerstand W des Zählers einer Summe aus dem gespeicherten ersten Zählerstand und einem vorbestimmten Zählwert entspricht, und Wiederholung der Schritte viii) und ix) einer Gewichtsmessung bei einer stufenweise verringerten Transportgeschwindigkeit bei einem ungültigen Gewichtsmessergebnis,

xi) Verringerung der Transportgeschwindigkeit auf null mm/sec und statische Gewichtsmessung, wobei dann eine Fehlermeldung ausgegeben wird, wenn innerhalb eines bestimmten Zeitbereichs kein gültiges Gewichtsmessergebnis vorliegt,

xii) Ansteuern des ersten Motors, um das flache Gut mit der ersten Transportgeschwindigkeit in Transportrichtung weiter zu transportieren und überprüfen, ob die Vorderkante des flachen Guts die Position des dritten Sensor erreicht,

xiii) Aussenden einer Meldung der Steuereinheit der dynamischen Waage über eine Bereitschaft zum Zuführen eines nächsten flachen Guts durch eine vorgelagerte Zuführstation und

xiv) Ansteuern eines zweiten Motors zum Antrieb einer Abzugsrolle der Abzugsvorrichtung zum Abziehen des flachen Guts von dem Wiegeteller.

Eine Anordnung zur Durchführung des Verfahrens zum Steuern einer dynamischen Waage für auf der Seite liegende flache Güter, gemäß Anspruch 1, umfasst Mittel zum Steuern des Transports der flachen Güter, einen Zähler, der mittels Speicherzellen eines Mikrocomputers gebildet wird und eine fortlaufende Zählung von Encoderimpulsen gestattet und Mittel für eine Gewichtsmessung eines bewegten flachen Gutes, welche gestartet wird, wenn die Hinterkante des flachen Gutes einen ersten Sensor erreicht, mit weiteren Speicherzellen zur Speicherung eines ersten Zählstandes W1 eines Zählers, wenn die Vorderkante eines flachen Gutes einen zweiten Sensor erreicht aber kein gültiges Gewichtsmessergebnis vorliegt und mit einem Schritt des Verfahrens, bei welchem eine Gewichtsmessung mit einer stufenweise verringerten Transportgeschwindigkeit erfolgt, wobei nach einer Abstufung der Transportgeschwindigkeit des flachen Gutes eine anschließende Gewichtsmessung mit einer nächst niedrigen Transportgeschwindigkeit vorgenommen wird, wobei dann der aktuelle Zählerstand W abgefragt und in weiteren Speicherzellen gespeichert wird, wenn weder ein gültiges Gewichtsmessergebnis noch festgestellt werden kann, dass die Hinterkante des flachen Gutes den ersten Sensor erreicht, obwohl die Vorderkante eines flachen Gutes einen zweiten Sensor erreicht hat, sowie mit Überprüfung, ob der aktuelle Zählerstand W des Zählers einer Summe aus dem gespeicherten ersten Zählerstand und einem vorbestimmten Zählwert entspricht, und Wiederholung der Abfragen und Subschritte des Schrittes durch den Mikrocomputer, solange der aktuelle Zählerstand W des Zählers eine Summe aus dem gespeicherten ersten Zählerstand und einem vorbestimmten Zählwert nicht erreicht und mit einer weiteren Abstufung der Transportgeschwindigkeit des flachen Gutes und Gültigkeitsprüfung des Gewichtsmessergebnises in mindesten einem weiteren Schritt des Verfahrens, wenn der aktuelle Zählerstand W des Zählers eine Summe aus dem gespeicherten ersten Zählerstand und einem vorbestimmten Zählwert erreicht.

Die dynamische Waage nutzt einen verkürzten Wiegeteller, der zum Wiegen von Standardpost optimiert ist und eine Transportvorrichtung aufweist. Das zum Einsatz kommende Steuerungsverfahren nutzt drei Sensoren, vorzugsweise optoelektronische Sensoren, die jeweils als Einweg-Lichtschranke ausgebildet sind. Solche optoelektronischen Sensoren weisen in einem auf einer Bodenplatte montierten Empfänger einen Fototransistor oder einen Fotodiode auf, die das vom Sender, vorzugsweise einer Leucht Emitter Diode (LED) ausgesendete Licht unter Benutzung des photoelektrischen Effekts in einen elektrischen Strom umwandeln, solange der Lichtstrahl nicht unterbrochen wird. Der Strom wird in eine analoge Spannung umgewandelt, die nach deren Umsetzung in einen digitalen Spannungswert von einem Mikrocomputer ausgewertet werden kann. Der Mikrocomputer ist Bestandteil einer Steuereinheit der dynamischen Waage. Mittels des Mikrocomputers wird auch ein Zähler realisiert, der ab dem Start des Antriebs der Transportvorrichtung die Impulse eines Encoders hochzählt. Ein dynamischer Wägevorgang wird gestartet, wenn von einem Mikrocomputer mit Hilfe eines ersten Sensors die Hinterkante eines zugeführten flachen Guts detektiert wird und somit das Gut einzeln und vollständig auf einem Wiegetelleraufliegt. Der erste Sensor wird vorzugsweise als Einweglichtschranke realisiert, die deshalb auch Einlauflichtschranke genannt wird. Das Gewichtsmesserergebnis wird auf Gültigkeit überprüft, wenn von dem Mikrocomputer mit Hilfe eines zweiten Sensors die Vorderkante des flachen Guts detektiert wird. Die Gewichsmessergebnisse sind stabil, wenn die Standardabweichung einer Sequenz von einer Anzahl N aufeinander folgender Messwerte gering ist, dann spricht man von einer Gültigkeit des Gewichtsmessergebnis. Der zweite Sensors ist gutstromabwärts des Wiegetellers auf einer Bodenplatte der dynamischen Waage montiert und weist ebenfalls eine Lichtschranke auf, die deshalb auch Auslauflichtschranke genannt wird. Der Lichtstrahl des zweiten Sensors ist (anders als bei dem DE 102010009431 A1) in der erfindungsgemäßen dynamischen Waage nach der Mitte des Transportweges durch die Waage, in einem kleinstmöglichen Abstand, vorzugsweise unmittelbar am Rand der gutstromabwärtigen Kante des Wiegetellers in Transportrichtung angeordnet.

Bei Ungültigkeit des Gewichtsmessergebnis wird ein erster Zählstand des Zählers gespeichert. Die Impulse des Encoders werden zunächst bis zu einem zweiten Zählstand weiter gezählt, der einem vorbestimmten Abstand von dem Lichtstrahl entspricht. Der Zähler und der zweite Sensor sind also vorgesehen, um ab einen vorbestimmen Abstand vom Lichtstrahl der Lichtschranke die Geschwindigkeit des transportierten flachen Guts schrittweise zu verringern und ggf. das transportierte flache Gut erfolgreich abbremsen zu können, falls noch kein gültiges Gewichtsmessergebnis vorliegt. Während des Wiegens erfolgt bei Bedarf eine Umschaltung der Transportgeschwindigkeit in mehreren Stufen auf einen niedrigeren vorbestimmten Wert zum dynamischen Wiegen und ggf. ein Abbremsen auf null zum statischen Wiegen. Die Stufenweite innerhalb des Transportweges ist in Form einer vorbestimmten Anzahl von Encoderimpulsen und die Stufenhöhe bei der Umschaltung der Transportgeschwindigkeit ist als Solldrehzahl für jede der Stufen elektronisch in einem Speicher einer Steuereinheit der dynamischen Waage gespeichert. Bei jeder Umschaltung der Transportgeschwindigkeit erfolgt eine Herunterregelung der Motordrehzahl entsprechend der gespeicherten Stufenhöhe. Zum Abbremsen der Transportgeschwindigkeit auf null erfolgt eine aktive Bremsung, die für ein jedes flaches Gut in einer dynamischen Waage reproduzierbar ist. Zur Durchführung der aktiven Bremsung ist eine Bremsschaltung vorgesehen, die parallel zu der Motorinduktivität anschaltbar ist. So wird in einer Entfernung von 55 mm vom Lichtstrahl der Lichtschranke des zweiten Sensors S2 bereits ein Abbremsen des flachen Gutes auf null erreicht. Am Ausgang der DS der PostBase100 ist ein dritter Sensor vorgesehen, der in einem Abstand von vorzugsweise 75,73 mm von dem zweiten Sensor in Transportrichtung entfernt, in einer Abzugsvorrichtung angeordnet ist.

Die dynamische Waage für ein auf der Seite liegend zu transportierendes flaches Gut weist außerdem einen Wiegeteller mit einer Transportvorrichtung auch ein Zuführdeck sowie die Abzugsvorrichtung auf. Das Zuführdeck ist in vier Teilabschnitte unterteilt, die in Transportrichtung aufgereiht aneinander grenzen. Ein erster Teilabschnitt des Zuführdecks liegt im Eingangsbereich der dynamischen Waage. Ein Wiegeteller in einem mittleren zweiten Teilabschnitt des Zuführdecks liegt als Last auf einer einzigen Wägezelle auf. Die Wiegetellerlänge im zweiten Teilabschnitt des Zuführdecks ist für flache Güter mit einem Standard-Fortmat optimiert, so dass für diese möglichst kleine Lücken zwischen den flachen Gütern erzeugt werden und ein maximaler Durchsatz an flachen Gütern pro Minute erzielt wird. Eine Abdeckung für einen Breitensensor folgt in einem mittleren dritten Teilabschnitt. Die beiden mittleren Teilabschnitte des Zuführdecks ermöglichen zusammen eine dynamische Verarbeitung von längeren flachen Gütern, beispielsweise von langen Formaten bis zum B4-Format, wobei der dritte Teilabschnitt so gestaltet ist, dass ein langes flaches Gut, welches beispielsweise das B4-Format aufweist, beim Verlassen des zweiten Teilabschnitts, den dritten Teilabschnitt nicht berührt. Die drei Sensoren der dynamischen Waage sind elektrisch mit der Steuereinheit der dynamischen Waage verbunden, um Sensorsignale zu empfangen. Die Steuereinheit ist auch vorgesehen, um Ansteuersignale an die Motoren zu übertragen, wobei ein erster Motor in einem Gestell unter dem Wiegeteller und ein zweiter Motor in der Abzugsvorrichtung angeordnet sind. Das Zuführdeck weist Öffnungen für den ersten und dritten Sensor auf. Es ist vorgesehen, dass ein zweiter Sensor in Transportrichtung x in einem Abstand von dem ersten Sensor entfernt hinter dem ausgangsseitigen Querrand des Wiegetellers angeordnet ist, wobei der Abstand einer ersten Länge entspricht und dass ein dritter Sensor unmittelbar benachbart einer Ausrichtwand am Ausgang der Waage und in einem zweiten Abstand von dem zweiten Sensor entfernt in Transportrichtung x angeordnet ist, wobei der Abstand einer zweiten Länge entspricht und wobei die erste Länge größer als die zweite Länge ist. Der Wiegeteller hat in Transportrichtung eine solche Länge, so dass ein kurzes flaches Gut vollständig auf dem Wiegeteller aufliegen und dennoch innerhalb der ersten Länge ein Wegteilstück in Transportrichtung mit einer ersten Transportgeschwindigkeit mittels einer Transportvorrichtung der dynamischen Waage transportiert werden kann, während mittels einer Wägezelle das Gewicht von dem flachen Gut, der Transportvorrichtung, des Wiegetellers und einem Gestell, über welches der Wiegeteller auf einem Lasteinleitungspunkt aus der Wägezelle aufliegt, gewogen wird.

Im Unterschied dazu kann ein langes flaches Gut über den Rand des Wiegetellers hinausragen, ohne den dritten Teilabschnitt des Zuführdecks zu berühren. Ein langes flaches Gut soll mit seinem Schwerpunkt noch auf dem Wiegeteller aufliegen, während es mit einer zweiten Transportgeschwindigkeit in Transportrichtung weiter transportiert wird. Die maximale Länge eines langen flachen Guts ist kleiner als die Summe der ersten und zweiten Länge, also des Abstandes der dritten von der ersten Lichtschranke, zumal auch das längste flache Gut dynamisch gewogen wird, das heißt, während des Wiegens ein Wegteilstück in Transportrichtung transportiert werden muss, allerdings mit einer sehr niedrigen n-ten Transportgeschwindigkeit. Eine Auswurfrolle und mindestens ein Andruckfinger bilden eine einfache Abzugsvorrichtung, die nahe an dem Ausgang der dynamischen Waage angeordnet ist. Die Abzugsvorrichtung ist ebenfalls auf der Bodenplatte der dynamischen Waage montiert. Die Auswurfrolle wird von dem zweiten Motor mit Systemgeschwindigkeit angetrieben. Der dynamischen Waage ein zweites flaches Gut zugeführt werden kann, während des erste flache Gut von der Abzugsvorrichtung erfasst und zu dem Ausgang der dynamischen Waage transportiert wird. Zur Dimensionsmessung kann außer dem Mittel zur Bestimmung der Breite unter dem mittleren dritten Teilabschnitt des Zuführdecks, auch ein Mittel zur Bestimmung der Länge des flachen Guts im ersten Teilabschnitt des Zuführdecks und ein Mittel zur Bestimmung der Dicke eines flachen Guts am Eingang der dynamischen Waage im zweiten Teilabschnitt des Zuführdecks vorgesehen sein.

Es ist vorteilhaft, dass die Umschaltung der Transportgeschwindigkeit in mehreren Stufen ein sicheres Anhalten des Transportbandes bei Bedarf ermöglicht, ohne dass das transportierte flache Gut weiterrutscht und zu spät zum Stillliegen kommt.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1, Draufsicht auf eine vereinfachte schematische Anordnung von Stationen eines bekannten Gutverarbeitungssystems,

Fig. 2, perspektivische Darstellung einer dynamischen Waage für auf der Seite liegend transportierte flache Güter, von vorn rechts oben,

Fig. 3, vereinfachte schematische Ansicht einer dynamischen Waage von vorn, in einer ersten Arbeitsphase vor dem Start,

Fig. 4a, vereinfachter Schaltplan der Steuereinheit (Variante 1),

Fig. 4b, vereinfachter Schaltplan der Steuereinheit (Variante 2),

Fig. 5a, 5b, 5c, 5d, vereinfachter schematischer Ablaufplan,

Fig. 6, vereinfachtes Geschwindigkeits-/Wegdiagramm,

Fig. 7a, 7b und 7c vereinfachte Geschwindigkeits-/Zeit-Diagramme.

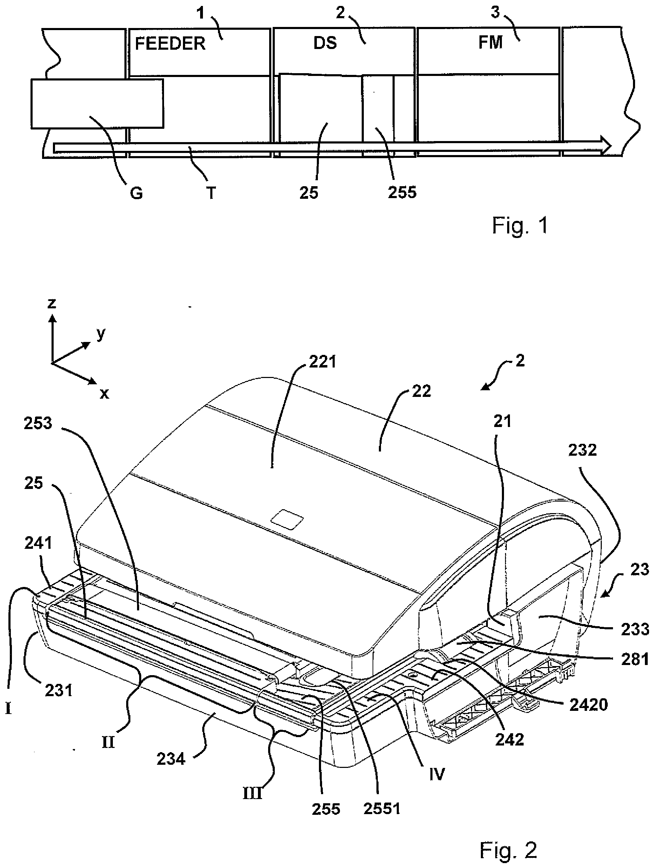

Die Figur 1 zeigt eine Draufsicht auf eine vereinfachte schematische Anordnung von Stationen eines bekannten Gutverarbeitungssystems. Ein flaches Gut G wird entlang eines Transportpfades T transportiert und durchläuft mehrere Stationen des Gutverarbeitungssystems. Bei mehreren flachen Gütern, die nacheinander transportiert werden, spricht man auch von einem Gutstrom. Eine erste Station 1 ist einer zweiten Station 2, der dynamischen Waage (DS), gutstromaufwärts vorangestellt. Eine dritte Station 3 ist gutstromabwärts, also im Transportpfad nach der dynamischen Waage angeordnet. Die Systemgeschwindigkeit ist die Transportgeschwindigkeit der flachen Güter bei einem Wechsel in die nächste Station. Beispielsweise bei einem Frankiersystem ist die erste Station 1 eine Vereinzelungsstation zur automatischen Zuführung (FEEDER) vereinzelter flacher Güter und die dritte Station 3 ist eine Frankiermaschine (FM). Die Stationen 1, 2 und 3 weisen jeweils eine Transportvorrichtung auf. Die Station 2 hat mindestens ein Transportband 253. Die Transportgeschwindigkeit wird in Transportrichtung x innerhalb der Stationen erhöht oder verringert oder ist mindestens gleich groß wie die Systemgeschwindigkeit. Letztere beträgt 530 mm/sec. Jede Station ist in der Lage, ein flaches Gut G aus der vorangehend angeordneten Station herauszuziehen und weiter zu transportieren.

Die Figur 2 zeigt eine perspektivische Darstellung einer dynamischen Waage 2 für auf der Seite liegend transportierte flache Güter, von vorn rechts oben. Eine Gehäuseoberschale 22 ist mit einer aufklappbaren durchsichtigen Haube 221 ausgestattet und auf einer Gehäuseunterschale 23 aufgesetzt, welche zwei Seitenwände 231, 233, eine Gehäuserückwand 232 und eine Vorderwand 234 aufweist. Ein Zuführdeck 24 ist gutstromeingangseitig sowie gutstromausgangseitig auf der Gehäuseunterschale 23 montiert.

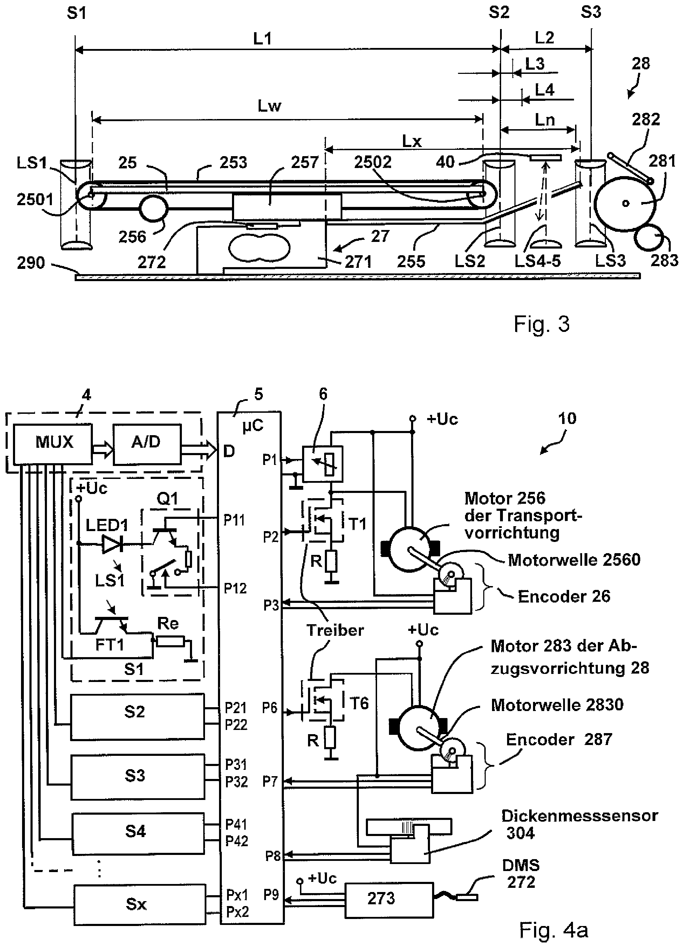

Ein Zuführdeck 24 besteht aus einem gutstromeingangseitigen ersten Teilabschnitt I und einem gutstromausgangseitigen vierten Teilabschnitt IV, die durch einen zweiten Abschnitt II und dritten Abschnitt III voneinander getrennt sind, wobei in dem zweiten Abschnitt II der Wiegeteller 25 und im dritten Abschnitt III eine an dem Wiegeteller montierte Abdeckung 255 für einen Breitensensors angeordnet sind. Ein Transportriemen 253 von einer Vielzahl an Transportriemen ist auf dem Wiegeteller 25 am nächsten der Vorderwand 234 der dynamischen Waage 2 angeordnet. In dem dritten Abschnitt III ist mindestens eine erste Fensteröffnung 2551 in der Abdeckung 255 des Breitensensors vorgesehen, die sich in y-Richtung erstreckt und gutstromabwärts des Transportbereichs des dritten Transportriemens 253 beginnt. Der gutstromeingangseitige Teilabschnitt I bzw. der gutstromausgangseitige Teilabschnitt IV des vorgenannten Zuführdecks 241 bzw. 242 liegen annähernd in einer gleichen Höhe über einer Bodenplatte 290 (Fig.3). Eine - nicht sichtbare - Ausrichtwand 20 begrenzt den ersten Teilabschnitt I des Zuführdecks in y-Richtung und eine Ausrichtwand 21 begrenzt den vierten Teilabschnitt IV des Zuführdecks in y-Richtung. Die gutstromeingangsseitige Ausrichtwand 20 ist in einer etwas geringeren Entfernung von der Tangente t angeordnet, als die gutstromausgangsseitige Ausrichtwand 21. Auch der gutstromeingangseitige erste Teilabschnitt I und der gutstromausgangseitige vierte Teilabschnitt IV des vorgenannten Zuführdecks 24 sowie die Abdeckung 255 für den Breitensensor weisen weitere Fensteröffnungen für eine Vielzahl von Sensoren auf. Diese Sensoren sind in der Darstellung nach Fig.2 durch die Gehäuseoberschale 22 verdeckt. An der Gehäuseoberschale 22 ist eine aufklappbare Haube 221 aus einem durchsichtigen Material montiert. Der Teilabschnitt IV des Zuführdecks 241 weist eine Öffnung 2420 für eine Auswurfrolle 281 der Abzugsvorrichtung auf.

In der Fig. 3 wird eine vereinfachte schematische Ansicht einer dynamischen Waage von vorn, in einer ersten Arbeitsphase vor dem Start des Transports von flachen Gütern mittels der Transportriemen der dynamischen Waage dargestellt. Die Sensoren S1, S2, S3 sind entlang des Transportpfades angeordnet und vorzugsweise als Lichtschranken LS1, LS2, LS3 ausgebildet. Zwischen den Empfänger- oder ein Senderteilen der Sensoren S1, S2, S3 bilden sich während des Betriebes die Lichtstrahlen der Lichtschranken LS1, LS2, LS3 aus, wenn kein Lichtstrahl durch ein flaches Gut unterbrochen wird. Die erste Lichtschranke LS1 liegt entgegengesetzt zur Transportrichtung x in einem ersten Abstand vor einer Antriebswelle 2501 der ersten Umlenkrollen. Die zweite Lichtschranke LS2 liegt in Transportrichtung x in einem zweiten Abstand nach einer Antriebswelle 2502 der zweiten Umlenkrollen. Eine Länge L1 ist diejenige eines Teilabschnittes des Transportweges, der zwischen den Sensoren S1 und S2 liegt. Eine Länge L2 liegt zwischen den Sensoren S2 und S3. Die Länge eines Teilabschnittes des Transportweges, die zwischen der Antriebswelle 2501 der ersten Umlenkrollen und der Antriebswelle 2502 der zweiten Umlenkrollen liegt sei die wirksame Länge Lw des Wiegetellers. Eine Befestigungsstelle der Abdeckung 255 des Breitensensors liegt gutstromaufwärts der Antriebswelle 2502. Die Abdeckung 255 hat eine maximale Länge Lx in Transportrichtung x. Die Längen L2, L3, L4, ... , Ln beginnen am Sensor S2 und erstrecken sich ebenfalls in Transportrichtung x, wobei L3 < L4 < ... < Ln < L2 gilt.

Der erste Sensor S1 ist als Lichtschranke LS2 ausgebildet und dient zum Detektieren der Vorderkante und der Hinterkante eines flachen Guts (Briefes) unmittelbar vor dem Eingang des Wiegetellers. Der zweite Sensor ist auch als Lichtschranke LS2 ausgebildet und dient zum Detektieren der Vorderkante des Briefes unmittelbar nach dem Ausgang des Wiegetellers. Der dritte Sensor ist ebenfalls als Lichtschranke LS3 ausgebildet und dient zum Detektieren der Vorderkante des Briefes am Ende des Wiegetellers. Die Sender-/Empfänger-Bauteile der dritten Lichtschranke LS3 sind an dem Transportpfad in einem Halteblech 2973 unmittelbar vor der Auswurfrolle 281 angeordnet. Der dritte Sensor befindet sich nahe einer Welle der Auswurfrolle 281, die zusammen mit dem mindestens einen Andruckfinger umfassenden Andruckmechanismus 282 am Ausgang der dynamischen Waage angeordnet sind.

Der erste Motor 256 ist - in einer nicht gezeigten Weise - in einem Fach eines Gestells 257 unter dem Wiegeteller 25 angeordnet und wirkt über ein Riemengetriebe (nicht gezeigt) auf jeweils eine erste gutstromeingangsseitig am Wiegeteller angeordnete Umlenkrolle eines jeden Transportriemens. Der erste Motor weist eine Motorwelle auf, die mit einer Encoderscheibe eines Encoders verbunden ist (Fig. 4a). Der erste Motor 256 wirkt - in einer nicht gezeigten Weise - auf ein Getriebe zum gemeinsamen Antrieb für eine Anzahl an angetriebenen Transportriemen. Das Gestell 257 ist auf einer Wägezelle 27 montiert. Die letztere ist auf der Bodenplatte 290 des Chassis angeordnet. Die Wägezelle 27 besteht aus einem Doppelbiegebalken-Federkörper 271 und einem Dehnungsmessstreifen (DMS) 272.

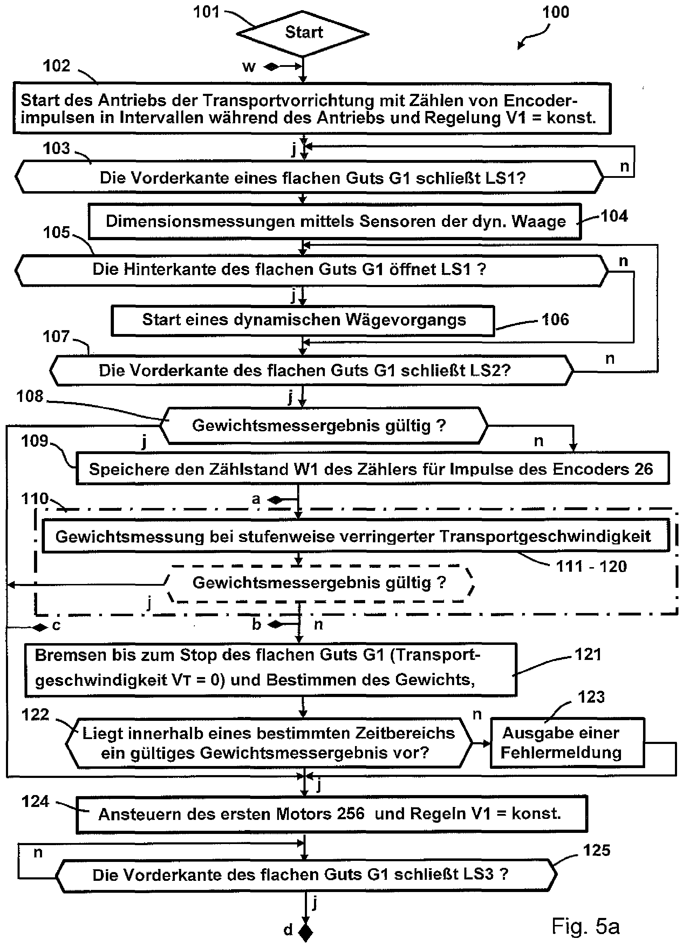

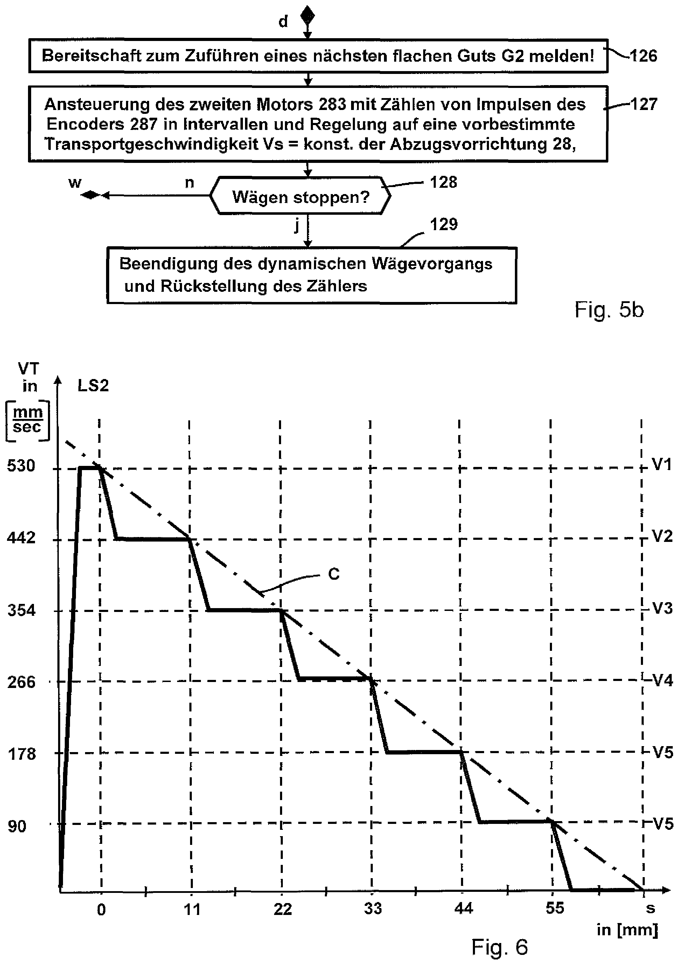

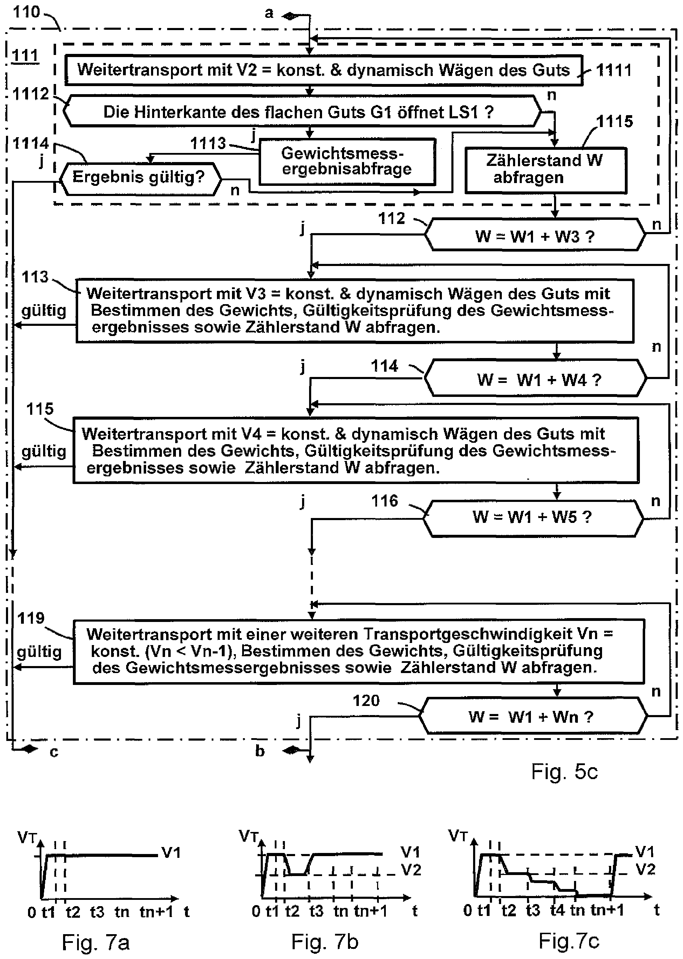

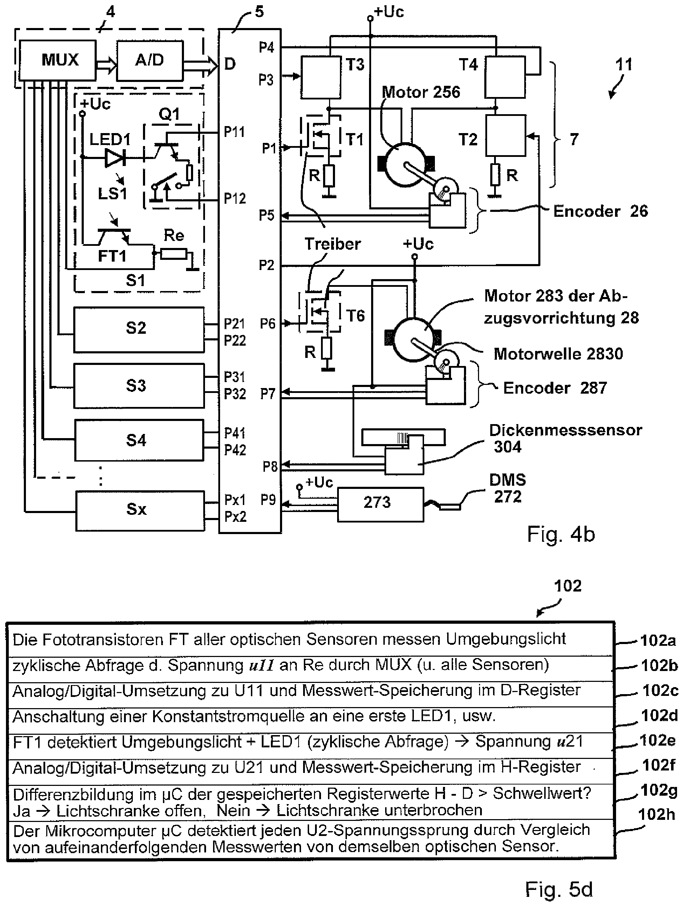

Ein zweiter Motor 283 ist an der Abzugsvorrichtung angeordnet und treibt - in einer nicht dargestellten Weise - über Zahnriemen und ein Zahnriemenscheibengetriebe die Welle der Auswurfrolle 281 an. Bei der vereinfachten Ansicht nach Fig. 3 wurde eine erste Baugruppe zur Dickenmessung und eine elektronische Schaltung weggelassen, wobei eine elektronische Schaltungsanordnung nachfolgend in Fig. 4a als vereinfachter Schaltplan der Steuereinheit näher erläutert wird und mit jedem der Empfänger- und Senderteile einer Lichtschranke elektrisch verbunden ist. Die elektronische Schaltungsanordnung kann beispielsweise auf einem Mainboard angeordnet und vorgesehen sein, um eine erhöhte Immunität gegen Fremdlichteinfluss auf optische Sensoren erreichen (Fig. 5).

Eine zweite Baugruppe ist zur Briefbreitenmessung vorgesehen. Die zweite Baugruppe weist Empfänger- und Senderteile für eine Vielzahl von Lichtschranken und beispielsweise eine Spindel zur Verstellung der Messposition an der jeweils interessierenden Formatgrenze auf. Das ist erforderlich, da in unterschiedlichen Ländern auch unterschiedliche Format gelten und somit eine länderspezifische Justage leicht möglich ist. Jeder Breitensensor wird vorzugsweise als Reflexsensor ausgeführt, wobei die Lichtstrahlen der Lichtschranken LS4-5 an einer Reflexfolie 40 reflektiert werden. Die Reflexfolie 40 ist an der Innenseite der Haube 221 gegenüber der Position der Empfänger- und Senderteile des Breitensensors angeordnet.

Mit der Wägung eines jeden flachen Guts wird begonnen, sobald das Gut einzeln und vollständig auf dem Wiegebereich aufliegt. Unter "einzeln" soll in diesem Zusammenhang ein Betriebszustand der Waage verstanden werden, in welchem sich auch kein weiteres flaches Gut mehr im Wiegebereich befindet.

Der Abstand zwischen den Lichtstrahlen der ersten und zweiten Lichtschranke erreicht eine erste Länge L1 von 306 mm. Die Länge der Wiegeschale beträgt beispielsweise ca. 300 mm. Der Wiegebereich ist vorzugsweise auf das dynamische Wägen von Standardbriefen des DIN-Formats C5 (16,2 cm x 22,9 cm) optimiert und wird durch die Lichtschranken LS1 am Eingang und LS3 vor dem Ausgang der dynamischen Waage begrenzt. Das entspricht einem Teilabschnitt des Transportweges von einer maximalen Länge Lmax = L1 + L2 = 382 mm.

Der Lichtstrahl bildet sich zwischen den Empfänger- oder ein Senderteilen der jeweiligen Sensoren aus. Mit anderen Worten gesagt: Die Lichtschranke ist offen. Die zweite Lichtschranke LS2 liegt zwischen den Lichtschranken LS1 und LS3 und ist ein Teilabschnitt des Transportweges mit einer zweiten Länge L2 = 75,73 mm von der Lichtschranke LS3 entfernt angeordnet. Ein in Transportrichtung x bewegter Standardbrief des DIN-Formats C5 (16,2 cm x 22,9 cm) schießt zuerst die Lichtschranke LS1 mit seiner Vorderkante und öffnet danach die Lichtschranke LS1 mit seiner Hinterkante wieder, bevor er die Lichtschranke LS2 mit seiner Vorderkante erreicht. Der Standardbrief wird dabei auf einem Teilabschnitt des Transportweges 306 mm - 229 mm = 77 mm in Transportrichtung mit einer ersten Transportgeschwindigkeit V1 = 530 mm/sec auf dem Wiegeteller weiter bewegt und gleichzeitig gewogen. Dabei kann ein Durchsatz von ca. 100 Standardbriefen pro Sekunde erreicht werden.

Der Lichtstrahl wird unterbrochen wenn der Standardbrief die Lichtschranke LS2 bedeckt. Mit anderen Worten: Die Lichtschranke schließt. Es wird nun geprüft, ob ein stabiler Gewichtsmesswert vorliegt. Schließt aber der zu wiegende Standardbrief mit seiner Vorderkante die Lichtschranke LS2 und liegt noch kein stabiler Gewichtsmesswert vor, so wird die Transportgeschwindigkeit stufenweise verringert und ggf. ein Bremsvorgang eingeleitet, der so durchgeführt wird, dass das flache Gut letztlich so anhält, dass seine Vorderkante die Lichtschranke LS3 noch nicht bedeckt - d.h. die Wiegeplattform nicht verlassen hat.

Während des Transportgeschwindigkeitsveringerungs- bzw. Bremsvorganges läuft die Gewichtsermittlung weiter. Führt diese zu einer erfolgreichen Ermittlung eines Gewichts für diesen Brief, so wird der Transportgeschwindigkeitsverringerungs- bzw. Bremsvorgang abgebrochen und das flache Gut wieder auf die gegebene Systemgeschwindigkeit beschleunigt. Falls nicht, wird nach dem Abschluss des Bremsvorganges eine statische Gewichtsmessung durchgeführt und das flache Gut erst danach wieder die Transportgeschwindigkeit erhöht, um es mit Systemgeschwindigkeit zur Station 3 weitertransportieren zu können.

Die Steuereinheit der dynamischen Waage ist mit den beiden Motoren elektrisch verbunden, um zu diesen die Ansteuerungssignale eines Steuerungsverfahrens der dynamischen Waage zu übertragen. Der Transportgeschwindigkeitsveringerungsvorgang erfolgt weggesteuert über den Encoder des Transportbandantriebs, in mindestens in wenigen groben Stufen. Zum Beispiel hat es sich aufgrund der Massenträgheit des flachen Gutes bei einer sehr geringen Reibung zwischen dem Gut und dem Transportband, bei einer Transportgeschwindigkeit VT = 530 mm/sec vor einer Transportgeschwindigkeitsverringerung bzw. einem Bremsen und dem gegebenen Abstand L2 = 75 mm zwischen den Lichtschranken LS2 und LS3 als vorteilhaft erwiesen, die Transportgeschwindigkeitsverringerung bzw. Bremsung so vorzunehmen, dass spätestens 55 mm nach dem die Vorderkante des flachen Gutes die Lichtschranke LS2 passiert hat, die Geschwindigkeit auf null reduziert wird, damit der Brief sicher vor LS3 zu stehen kommt. Damit ergibt sich für eine Abstufung in sechs Stufen von 530 mm/sec auf 0 mm/sec eine Stufenfolge laut Tabelle 1:

| Stufe | Position Briefvorderkante | Stufengeschwindigkeit | Zeitdauer |
|---|---|---|---|
| 1 | LS2 close + 0 mm | 442mm/sec | 0,023 sec |
| 2 | LS2 close + 11 mm | 354 mm/sec | 0,030 sec |
| 3 | LS2 close + 22 mm | 266 mm/sec | 0,040 sec |
| 4 | LS2 close + 33 mm | 178 mm/sec | 0,060 sec |
| 5 | LS2 close + 44 mm | 90 mm/sec | 0,080 sec |
| 6 | LS2 close + 55 mm | 0 mm/sec | $\infty$ sec |

In der Fig. 6 sind die Werte aus der Tabelle 1 in einem vereinfachten Geschwindigkeits-/Weg-Diagramm dargestellt. Eine Ordinatenachse gibt die Transportgeschwindigkeit VT in mm/sec und eine Abszissenachse gibt die Weglänge s in mm ab der Lichtschranke LS2 in Transportrichtung an. Nach dem Start wird die Transportgeschwindigkeit V1 = 530 mm/sec erreicht und das flache Gut mit konstanter Transportgeschwindigkeit V1 in Transportrichtung transportiert. Schließt die Lichtschranke LS2, dann wird auf die Transportgeschwindigkeit V2 der nächst niedrigeren Stufe usw. gewechselt, wenn kein gültiges Gewichtsmessergebnis vorliegt. Im Grenzfall wird auf einer untersten Stufe der treppenförmigen Funktionskurve die Transportvorrichtung angehalten und das bewegte flache Gut kommt zum Stillstand. Aus der Fig. 6 ist ein gleichmäßiges Abfallen von der Transportgeschwindigkeit von 530 mm/sec um 88 mm/sec je Stufe auf die nächst niedrigere Stufengeschwindigkeit pro Stufe ersichtlich. Unter einem "gleichmäßigen" Abfallen soll verstanden werden, dass eine an die Stufen angelegte Hüllkurve C eine lineare Funktion aufweist, also einer Geraden mit linearem Verlauf gemäß der Gleichung (1) entspricht:

$$V_T = - m \cdot s + 530 \text{ mm/sec} \qquad\qquad (1)$$

Der Weg s wird in mm und der durchschnittliche negative Anstieg m in 1/sec angegeben, so dass sich ein Abfallen der Hüllkurvengeraden in einer Größe von m = 8 mm/sec von jeder Stufe der Transportgeschwindigkeit ergibt.

Ein Verringern der Transportgeschwindigkeit zu einer nächst niedrigeren Stufe kann in 0,08 sec bis 0,1 sec durch ein Herunterregeln ohne Bremsung erfolgen. Die in der obigen Tabelle 1 angegebene Zeitdauer resultiert aus einem Herunterregeln mit zusätzlich aktiven Bremsen. Die Transportgeschwindigkeit kann durch ein aktives Bremsen zu einer nächst niedrigeren Stufe auch noch deutlich schneller verringert werden. Somit steht mehr Messzeit je Stufe zur Verfügung, während das flache Gut mit einer konstanten Transportgeschwindigkeit V1, V2, V3, V4 oder V5 transportiert wird. Im nachfolgenden Ausführungsbeispiel wird die nächst niedrigere Stufe innerhalb von 0,01 sec erreicht. Das flache Gut benötigt für das Durchlaufen einer ersten Stufe beispielsweise eine Zeit ts1 = 0,023 sec, wobei die Transportgeschwindigkeit in einem ersten Schritt von V1 = 530 mm/sec auf V2 = 442 mm/sec in ca. einer hundertsten Sekunde verringert wird, wobei das Gut noch ca. 5 mm weiter transportiert wird und nach dieser zurückgelegten Wegstrecke auf dem Transportband auf einer ersten Stufe der Transportgeschwindigkeit VT = V2 = 442 mm/sec angelangt ist und anschließend weitere 6 mm Wegstrecke mit einer konstanten Transportgeschwindigkeit V2 transportiert wird. Würde das flache Gut nach dem Abfallen der Transportgeschwindigkeit von V1 auf V2 eine Wegstrecke mit einer konstanten Transportgeschwindigkeit V2 weiter transportiert, würde bereits eine längere Zeitdauer verstreichen, die als Meßzeit zur Verfügung stünde. Jedoch wird auf die höhere Stufe zurück gewechselt, wenn vor dem Ende der ersten Stufe bereits ein gültiges Gewichtsmessergebnis vorliegt (Fig. 7b).

Für ein Durchlaufen einer zweiten Stufe wird beispielsweise insgesamt eine Zeitdauer ts2 = 0,03 sec benötigt. Für ein Durchlaufen einer dritten Stufe wird beispielsweise insgesamt eine Zeitdauer ts3 = 0,04 sec benötigt. Für ein Durchlaufen einer vierten Stufe wird beispielsweise insgesamt eine Zeitdauer ts4 = 0,06 sec benötigt. Für ein Durchlaufen einer fünften Stufe wird beispielsweise insgesamt eine Zeitdauer ts5 = 0,08 sec benötigt. Insgesamt ergibt sich eine Gesamtzeitdauer tsges = ts1 + ts2 + ts3 + ts4 + ts5 = 0,23 sec für ein Durchlaufen aller fünf Stufen bei einer stufenweise gleichmäßig verringerten Transportgeschwindigkeit VT ‡ 0. Die zur Verfügung stehende Meßzeit für eine Gewichtsmessung wird somit gegen über der ersten Stufe durch eine weitere Abstufung um eine Größenordnung erhöht.

Die zur Verfügung stehende Messzeit für das Durchlaufen einer Stufe erhöht sich von Stufe zu Stufe folglich nichtlinear. Ein Durchlaufen einer sechsten Stufe bei VT = 0 mm/sec kann theoretisch unendlich lange dauern. Aus diesem Grunde wurde eine Zeitbegrenzung installiert, welche die Gewichstmessung nach einer vorbestimmten Zeit abbricht. Wenn in vorstehendem Beispiel auch von einer Anzahl von sechs Stufen ausgegangen wird, so soll damit nicht ausgeschlossen werden, dass eine geringere Anzahl von Stufen möglich wäre, beispielsweise vier Stufen (Fig. 7c). Bei Bedarf kann jedoch auch eine "feinere" Abstufung vorgenommen werden, um ein "gleichmäßigeres" Abfallen von der Transportgeschwindigkeit zu realisieren.

Alternativ könnte durch eine entsprechende Abstufung auch eine nichtlineare Hüllkurve realisiert werden. Beispielsweise so, dass die zur Verfügung stehende Messzeit für das Durchlaufen einer Stufe sich linear von Stufe zu Stufe erhöht.

Als Hüllkurve ist eine Anzahl an unterschiedlichen Kurvenverläufen denkbar. So kann eine nichtlineare Hüllkurve so realisiert werden, dass die zur Verfügung stehende Messzeit für das Durchlaufen einer Stufe sich nichtlinear von Stufe zu Stufe erhöht.

Die Fig. 4a zeigt einen vereinfachten Schaltplan der Steuereinheit nach einer ersten Variante. Der Schaltplan der Steuereinheit 10 der dynamischen Waage weist einen Mikrocomputer 5 auf, dessen digitaler Dateneingang D mit dem digitalen Ausgang einer Eingangsschaltung 4 elektrisch verbunden ist. Die Eingangsschaltung 4 enthält einen Multiplexer und einen A/D-Wandler, wobei die analogen Ausgänge aller Sensoren S1, S2, ... bis Sx an den analogen Eingängen des Multiplexers angeschlossen sind und der analoge Ausgang des Multiplexers mit einem analogen Eingang des A/D-Wandler ist. Die Sensoren sind alle prinzipiell gleich aufgebaut und weisen jeweils einen Lichtsender und einen Lichtempfänger auf. Der Lichtempfänger umfasst einen npn-Fototransistor, dessen Emitter über einen Eingangswiderstand Re auf Masse liegt und dessen Kollektor mit Betriebsspannung +Uc verbunden ist. Am Eingangswiderstand Re fällt eine Spannung ab, deren Höhe in Abhängigkeit von der Beleuchtungsstärke eines Lichtstrahls, der auf die Basis des npn-Fototransistors auftrifft, variiert.

Durch den Multiplexer der Eingangsschaltung 4 werden nacheinander die Eingangsspannungen der Sensoren abgefragt und über den A/D-Wandler in einen Digitalwert transformiert.

Der Mikrocomputer 5 weist einen analogen Ausgang am PIN P11 und einen digitalen Ausgang am PIN P12 auf, um ein Stromquelle Q1 des ersten Sensors anzusteuern, wobei über den analogen Ausgang am PIN P11 zur Steuerung der Stromquelle eine Gleichspannung an der Basis eines npn-Transistors angelegt wird. Zwischen Masse und dem Emitter des npn-Transistors sind ein elektronischer Schalter und ein Emitterwiderstand in Reihe geschaltet, so dass eine Gleichspannung an dem Emitterwiderstand abfällt, die einen konstanten Stromfuss durch den Emitterwiderstand bewirkt, wenn der elektronischer Schalter angesteuert durch den digitalen Ausgang am PIN P12 auf Stromdurchgang geschaltet ist.

Eine Licht-Emitter-Diode (LED1) ist einerseits am Kollektor des npn-Transistors angeschlossen und andererseits mit Betriebsspannung +Uc verbunden. Somit fließt ein konstanter Gleichstrom durch die Licht-Emitter-Diode (LED1) und bringt diese dazu einen Lichtstrahl zu emittieren, wenn der elektronische Schalter auf Stromdurchgang geschaltet ist.

Der Mikrocomputer 5 weist weitere analoge Ausgänge an den PINs P21, P31, P41, ... Px1 und weitere digitale Ausgänge an den PINs P22, P32, P42, ... , Px2 auf, um die Sensoren S2, ... bis Sx ansteuern zu können. Der Mikrocomputer 5 weist weiter einen analogen Ausgang an dem PIN P1 auf, um einen elektronisch steuerbaren Widerstand einer Bremsschaltung 6 bei Bedarf anzusteuern, dessen Widerstand parallel zu der Impedanz des Motor 256 der Transportvorrichtung geschaltet ist.

Der Mikrocomputer 5 weist weitere digitale Ausgänge an den PINs P2 und P6 auf, um jeweils pulsdauermodulierte Impulse an einen Steuereingang des jeweiligen Treibers T1 und T6 anzulegen. Als Treiber werden vorzugsweise MOSFETs eingesetzt, deren Source über einen Widerstand R mit Masse verbunden ist und zwischen deren Drain und der Betriebsspannung +Uc jeweils ein Motor 256, 287 geschaltet ist, vorzugsweise werden Gleichstrommotoren eingesetzt. Der Motor 256 der Transportvorrichtung weist eine Motorwelle 2560 mit einer Encoderscheibe für einen Encoder 26 auf. Der Motor 283 einer Abzugsvorrichtung 28 weist ebenfalls eine Motorwelle 2830 mit einer Encoderscheibe für einen Encoder 287 auf. Jeweils eine Anschlussleitung der Encoder und eines Dickenmesssensor 304 ist mit Masse und eine weitere Anschlussleitung ist jeweils mit Betriebsspannung +Uc verbunden. Der Ausgang des Encoders 26 ist an PIN P3, der Ausgang des Encoders 26 ist an PIN P7 und der Ausgang eines Dickenmesssensors 304 ist an PIN P8 des Mikrocomputers 5 angeschlossen.

Die Encoder und der Dickenmesssensor 304 liefern Impulse, die vom Mikrocomputer 5 gezählt und ausgewertet werden. Der analoge Ausgang des Dehnungsmessstreifens (DMS) 272 der Wägezelle 27 ist mit einem analogen Eingang einer elektronischen Messwertverarbeitungseinheit 273 elektrisch verbunden, die ausgangsseitig eine digitale serielle Schnittstelle RS232 aufweist. Der Ausgang der elektronischen Messwertverarbeitungseinheit 273 ist an PIN P9 des Mikrocomputers 5 angeschlossen.

Die Fig. 4b zeigt einen vereinfachten Schaltplan der Steuereinheit nach einer zweiten Variante. Der Schaltplan der Steuereinheit 11 der dynamischen Waage weist ebenfalls Sensoren S1, S2, ... bis Sx, zwei Encoder 26 und 283, einen Dickenmesssensor 304 und einen Mikrocomputer 5 auf, dessen digitaler Dateneingang D mit dem digitalen Ausgang einer Eingangsschaltung 4 elektrisch verbunden ist. Die Steuereinheit enthält den Mikrocomputer, der auf ein Mainboard gelötet ist oder ein auf das Mainboard gestecktes Prozessormodul. Die Ansteuerung des Motors 283 der Abzugsvorrichtung 28 erfolgt genauso wie bei der Steuereinheit 10 der dynamischen Waage nach Fig. 4a. Lediglich die Bremsschaltung 6 der Variante 1 wurde durch eine Brückenschaltung 7 der Variante 2 ersetzt. Brückenschaltung 7 weist vier MOSFETs T1 bis T4 auf. Die MOSFETs T1 und T2, die zueinander gegenüber in der Brückenschaltung angeordnet sind, werden gleichzeitig angesteuert, falls der Motor 256 schnell abgebremst werden soll. Die im Motor gespeicherte Energie wird dann in die Widerstande R geleitet und in Wärmeenergie umgewandelt, die dann an die Umgebung abgeführt wird.

Bei einer weiteren - nicht näher dargestellten - Variante der Steuereinheit ist die Brückenschaltung in einem Mikrocomputerchip integriert auf einem Mainboard angeordnet.

Die Fig. 5a, 5b, 5c und 5d zeigen einen vereinfachten schematischen Ablaufplan für die Steuereinheit der dynamischen Waage. Die Routine 100 zu Steuerung der dynamischen Waage beginnt im Start-Schritt 101 damit, dass alle Stationen 1, 2 und 3 des Gutverarbeitungssystems (Fig. 1) und ggf. weitere Peripheriegeräte eingeschaltet werden. Im Schritt 102 wird der Motor 256 vom Mikrocomputer zum Start des Antriebes der Transportvorrichtung der dynamischen Waage 2 entsprechend mit in der Impulsbreite modulierten Impulsen angesteuert, um die gewünschte Transportgeschwindigkeit V1 für flache Güter zu erreichen und um diese über eine Motordrehzahlregelung annähernd konstant zu halten. Im Schritt 102 wird auch ein Zählen der Encoderimpulse des Encoders 26 gestartet. Im Schritt 102 werden eine Vielzahl von Subschritten (Fig. 5d) gestartet, die zur Auswertung von den Sensorsignalen benötigt werden, die ständig im Hintergrund parallel zu der Routine 100 laufen und zyklisch wiederholt werden.

In einem Abfrageschritt 103 wird anschließend vom Mikrocomputer ermittelt, ob die Lichtschranke LS1 des ersten Sensors S1 durch eine Vorderkante eines flachen Guts geschlossen wurde. Kann die Frage im Abfrageschritt 103 bejaht werden, dass die Lichtschranke LS1 Vorderkante eines flachen Guts G1 detektiert, dann wird zum Schritt 104 verzweigt und mindestens eine der Dimensionsmessungen gestartet. So kann die Dicke eines Guts mittels des Dickenmesssensors und weiteren Dimensionen (Länge, Breite) des Gutes mittels nicht näher dargestellten Sensoren ermittelt werden. Solche Dimensionsmessungen können im Hintergrund der Routine 100 ablaufen. Außerdem kann die dynamische Waage schon vor dem Start des dynamischen Wägevorganges des ersten flachen Gutes automatisch tariert und somit auf einen Gewichtswert ohne ein flaches Gut eingemessen werden, der dem Gewichtswert von Null Newton entspricht. Zum Beginn des Schritts 103 wird zurück verzweigt, wenn das nicht der Fall ist, also die Frage im Abfrageschritt 103 verneint werden muss.

Nach dem Schritt 104 wird in einem folgenden Abfrageschritt 105 vom Mikrocomputer ermittelt, ob die Lichtschranke LS1 des ersten Sensors S1 durch eine Hinterkante eines flachen Guts geöffnet wurde. Natürlich kann erst dann, wenn das flache Gut vollständig auf dem Wiegeteller aufliegt, die Hinterkante detektiert werden. Die Lichtschranke LS1 wird zuerst öffnen, wenn es sich bei dem flachen Gut um ein kurzes Gut, also um Standardbriefe handelt. Anderenfalls wird die Lichtschranke LS2 wird zuerst schließen, wenn es sich bei dem flachen Gut um ein langes Gut, also um Briefe mit dem größten Format handelt. Deshalb wird vom Abfrageschritt 105 zum nächsten Abfrageschritt 107 verzweigt, wenn die Frage des Abfrageschritts 105 verneint werden muss. Jedoch wird zu einem Schritt 106 verzweigt, wenn die Frage des Abfrageschritts 105 bejaht werden kann. In dem Schritt 106 wird und Gewichtsmessungen des flachen Gutes mittels der Wägezelle 27 der dynamischen Waage begonnen bzw. durchgeführt. Solche Gewichtsmessungen können im Hintergrund der Routine 100 zur Steuerung der dynamischen Waage ablaufen. Vom Schritt 106 wird zu dem Abfrageschritt 107 verzweigt. Vom Mikrocomputer wird in dem Abfrageschritt 107 geprüft, ob die Lichtschranke LS2 bereits geschlossen wurde. Von letzterem Abfrageschritt 107 wird an den Beginn des Abfrageschritts 105 zurück verzweigt, wenn das nicht der Fall ist. Diese Schleife kann viele Male durchlaufen werden, bis die Vorderkante des flachen Guts G1 von der Lichtschranke LS2 in Zusammenwirken mit dem Mikrocomputer detektiert wird. In diesem Fall ist die Lichtschranke LS2 geschlossen und von der Routine 100 wird zu einem Abfrageschritt 108 verzweigt, um festzustellen, ob inzwischen ein gültiges Gewichtsmessergebnis vorliegt. Zum Schritt 124 wird dann verzweigt, wenn ein gültiges Gewichtsmessergebnis vorliegt, um den Motor 256 der Transportvorrichtung weiter anzusteuern, damit das flache Gut mit einer konstanten Transportgeschwindigkeit V1 weiter in Transportrichtung transportiert wird. Anderenfalls, wenn kein gültiges Gewichtsmessergebnis vorliegt, wird dann zum Schritt 109 verzweigt.

Das im Schritt 102 gestartete Zählen der Encoderimpulse des Encoders 26 hat inzwischen zu einem ersten Zahlstand W1 geführt und im Schritt 109 wird nun der Zählstand W1 in einem Speicher des Mikrocomputers gespeichert. In der Routine wird ein Programmpunkt a erreicht. Der nachfolgende Schritt 110 ist vereinfacht dargestellt und durch einen Block mit einer Strich-Punkt-Linie gekennzeichnet. Eine detailliertere Darstellung ist der Fig. 5c entnehmbar. Im Schritt 110 erfolgt eine Anzahl an Gewichtsmessung bei schrittweise verringerter Transportgeschwindigkeit. Dabei wird geprüft, ob das Gewichtsmessergebnis gültig ist. Im Falle einer Bejahung wird ein Programmpunkt c erreicht und wieder zum Schritt 124 verzweigt. Im Falle einer Verneinung wird ein Programmpunkt b erreicht und dann zum Schritt 121 verzweigt. In diesem erfolgt ein weiteres Herunterregeln der Transportgeschwindigkeit bis zum Anhalten der Transportvorrichtung, wobei das Herunterregeln mit einem Bremsen bis zum Stopp des flachen Guts kombiniert werden kann. Anschließend wird im nachfolgendem Abfrageschritt 122 eine Überprüfung durchführt, ob innerhalb eines vorbestimmten Zeitbereichs ein gültiges Gewichtsmessergebnis vorgelegen hat. Im positiven Fall wird wieder zum Schritt 124 verzweigt. Anderenfalls erfolgt in einem Schritt 123 die Ausgabe einer Fehlermeldung und erst danach wird wieder zum Schritt 124 verzweigt. Anschließend wird ein Abfrageschritt 125 erreicht und geprüft, ob die Vorderkante des flachen Guts die dritte Lichtschranke LS3 erreicht hat. Die Routine 100 ist an einem Programmpunkt d angelangt, wenn dies positiv der Fall ist und die Vorderkante des Guts die dritte Lichtschranke LS3 geschlossen hat. Anderenfalls wird zum Beginn des Abfrageschritts 125 zurück verzweigt.

Die Fig. 5b zeigt den weiteren Ablauf der Routine 100 ab dem Programmpunkt d. Die Vorderkante des flachen Guts G1 ist weit über den Wiegebereich hinaus gelangt und soll nun aus der dynamischen Waage ausgeworfen werden. Ein zweites flaches Gut G2 kann der dynamischen Waage zugeführt werden. In einem Schritt 126 der Routine wird der im Transportweg T voran angeordneten Station 1 (Fig.1) über eine Kommunikationsverbindung die Bereitschaft zum Zuführen eines nächsten flachen Guts G2 gemeldet.

Anschließend erfolgt im nachfolgenden Schritt 127 der Routine 100 eine Ansteuerung des zweiten Motors 283 der dynamischen Waage. Letzterer dient zum Antrieb der Auswurfrolle 281 der Abzugsvorrichtung 28. Die Motorwelle 2830 ist mit einer Encoderscheibe des Encoders 287 gekoppelt. Der Ausgang des Encoders 287 ist mit dem PIN P7 des Mikrocomputers 5 verbunden. Der Mikrocomputer zählt in Zeitintervallen die Impulse des Encoders 287 um die Drehzahl des zweiten Motors 283 so zu regeln, dass eine konstante vorbestimmte Transportgeschwindigkeit, die gleich der Systemgeschwindigkeit Vs ist, durch die Abzugsvorrichtung 28 erreicht wird. Im nachfolgendem Abfrageschritt 128 erfolgt eine Überprüfung, ob ein Zustand der Waage bzw. ein entsprechen Befehl vorliegt, das Wägen zu stoppen. Ist das nicht der Fall dann wird in der Routine 100 ein Programmpunkt w erreicht und zu Beginn des Schrittes 102 der Routine 100 zurück verzweigt. Anderenfalls wird der dynamische Wägevorgang beendet und der Zähler auf einen Anfangswert zurückgestellt.

Die Fig. 5c zeigt in einer detailliertere Darstellung eine Anzahl an Subschritten des Schritts 110 ab dem Programmpunkt a. In einem Unterprogramm 111 der Routine 100 wird die Transportgeschwindigkeit von V1 auf V2 heruntergeregelt und vom Mikrocomputer wird das Unterprogramm weiter abgearbeitet. Ein Weitertransport des flachen Gut erfolgt im Ergebnis eines ersten Schritts 1111 des Unterprogramms nun mit einer konstanten Transportgeschwindigkeit V2 < V1. Unter dynamischen Wägen soll ein Weitertransport des flachen Guts während des Wägens verstanden werden. Bei großformatigen bzw. einem langen Gut wird in der Regel zuerst die zweite Lichtschranke LS2 geschlossen und vom Mikrocomputer die Vorderkante des flachen Guts G1 detektiert und erst danach die zweite Lichtschranke LS2 geöffnet und vom Mikrocomputer die Hinterkante des flachen Guts G1 detektiert. In einem Abfrageschritt 1112 wird geprüft, ob die Hinterkante des flachen Guts G1 die erste Lichtschranke LS1 bereits erreicht hat und die erste Lichtschranke LS1 wieder geöffnet wurde. In einem Schritt 1113 erfolgt eine Gewichsmessergebnisabfrage, wenn die Hinterkante des flachen Guts G1 detektiert wurde. Anderenfalls wird auf einen Schritt 1115 verzweigt und der Zählerstand W abgefragt.

In einem Abfrageschritt 1114 wird festgestellt, ob das Ergebnis der Gewichtsmessung gültig ist. Im positiven Fall wird auf einen Programmpunkt c der Routine 100 verzweigt. Anderenfalls wird auf einen Schritt 1115 verzweigt. Anschließend wird das Unterprogramm 111 verlassen und auf einen Abfrageschritt 112 der Routine 100 verzweigt, in welchem geprüft wird, ob die Summe aus dem gespeicherten Zählerstand W1 und einem vorbestimmten Zählwert W3 gleich dem abgefragten Zählerstand W ist. Dem vorbestimmten Zählwert W3 entspricht die mit einem Porportionalitätsfaktor N multiplizierte Länge L3 des Transportwegabschnitts, welcher der Position der zweiten Lichtschranke LS2 am nächsten liegt und dieser in Transportrichtung x folgt (Fig.3). Der Porportionalitätsfaktor N ist die Anzahl der Encoderimpulse pro mm Weglänge s. Auf den Beginn des Unterprogramms 111 wird zurückverzweigt, falls der vorbestimmte Zählwert W3 noch nicht erreicht wurde. Anderenfalls wird auf ein Unterprogramm 113 verzweigt. In einem ersten Schritt 1131 des - nicht näher dargestellten - Unterprogramms wird mit einer konstanten Transportgeschwindigkeit V3 < V2 gearbeitet, nach dem die Drehzahl des Motors weiter verringert wurde. Es erfolgt wieder ein dynamisches Wägen des Guts mit einem Bestimmen des Gewichts und einer Gültigkeitsprüfung des Gewichtsmessergebnisses. Auch wird wieder der aktuelle Zählerstand W des Zählers abgefragt, wenn das Gewichtsmessergebnis ungültig ist oder wenn die erste Lichtschranke LS1 noch geschlossen ist, weil die Hinterkante des flachen Guts die erste Lichtschranke LS1 noch nicht erreicht hat. Die erste Lichtschranke LS1 wird geöffnet, wenn die Hinterkante des flachen Guts die erste Lichtschranke LS1 passiert hat. Dann liegt auch ein langes flaches Gut vollständig auf der Wiegeschale auf und die Gewichtsmessung kann zu einem gültigen Ergebnis führen. Bei einem gültigen Ergebnis wird vom Unterprogramm 113 wieder auf den Programmpunkt c der Routine 100 verzweigt. Anderenfalls bei einem ungültigen Ergebnis wird zu einem Abfrageschritt 114 der Routine 100 verzweigt, in welchem geprüft wird, ob die Summe aus dem gespeicherten Zählerstand W1 und einem vorbestimmten Zählwert W4 gleich dem abgefragten Zählerstand W ist. Dem vorbestimmten Zählwert W4 entspricht die mit einem Porportionalitätsfaktor N multiplizierte Länge L4 des Transportwegabschnitts, wobei ein Wegpunkt erreicht wird, welcher der Position des vorherigen Wegpunktes am nächsten liegt, die von der Vorderkante des flachen Guts bei einem Zählwert W3 erreicht wurde und dieser in Transportrichtung x folgt (Fig.3). Auf den Beginn des Unterprogramms 113 wird zurückverzweigt, falls der vorbestimmte Zählwert W4 noch nicht erreicht wurde. Anderenfalls wird auf ein Unterprogramm 115 verzweigt. Das Unterprogramm 115 und ein nachfolgender Abfrageschritt 116 der Routine 100 laufen im Prinzip genauso wie die anderen Unterprogramme 111, 113, ... 119 und Abfrageschritte 112, 114, ... ,120 der Routine 100 ab. Nur die vorgegebenen Transportgeschwindigkeiten nehmen stufenweise ab (Vn < Vn-1) und die vorbestimmten Zählwerte W3 bis Wn nehmen zu. Die mit N multiplizierte Länge Ln des Transportwegabschnitts entspricht wieder dem vorbestimmten Zählwert Wn, wobei die Summe aus W1 und Wn einen durch die Vorderkante des flachen Gutes erreichten Wegpunkt auf dem Transportweg definiert.

In der Fig. 5d werden Subschritte des Schrittes 102 der Routine 100 dargestellt, die ständig im Hintergrund parallel zu der Routine 100 laufen und zyklisch wiederholt werden. Bei einer Auswertung der Sensorsignale muss der Umgebungslichteinfluss berücksichtigt werden, denn die Fototransistoren FT aller optischen Sensoren messen das von der LED des Lichtsenders ausgesendete Licht und auch das Umgebungslicht. Gemäß dem Subschritt 102a messen die Fototransistoren FT aller optischen Sensoren jedoch nur das Umgebungslicht allein, wenn die Stromquelle Q der LED ausgeschaltet ist, wie das für den Sensor S1 anhand Q1, LED1, FT1 und dem Eingangswiderstand Re in der Fig.4a dargestellt wurde. In einem zweiten Subschritt 102b erfolgt eine zyklische Abfrage der am Eingangswiderstand Re abfallenden analogen Spannung $u11$ durch einen Multiplexer MUX der Eingangsschaltung 4 und für die analogen Spannungen $u12... u1x$, die an den Eingangswiderständen Re aller Sensoren S1 bis Sx abfallen. Der Analog/Digital-Umsetzer der Eingangsschaltung 4 nimmt im Subschritt 102c eine Analog/Digital-Umsetzung jeder der analogen Spannungen $u12... u1x$ zu digitalen Werten U12 ... U1x vor und in einem D-Register des Mikrocomputers 5 erfolgt eine Messwert-Speicherung. Anschließend erfolgt im Subschritt 102d eine Anschaltung einer Konstantstromquelle Q1 an eine erste LED1 des Sensors S1 und nacheinander der übrigen Konstantstromquellen Q1 ...Qx an die LEDs der übrigen Sensoren S2 bis Sx, falls das der Programmablauf der Routine 100 erfordert. In einem Subschritt 102e detektiert der Fototransistor FT1 nun die Summe von Umgebungslicht und dem Licht der LED1 als analogen Spannungsabfall $u21$ an Re. Das erfolgt auch für die übrigen analogen Spannungsabfälle an Re der restlichen Sensoren, wenn das der Programmablauf der Routine 100 erfordert. Dann erfolgt eine zyklische Abfrage der analogen Spannungen $u21... u2x$ durch den Multiplexer MUX der Eingangsschaltung 4. In einem Subschritt 102f erfolgt wieder eine Analog/Digital-Umsetzung zu digitalen Spannungswerten U21 ... U2x und deren Messwert-Speicherung in einem H-Register. In einen nachfolgenden Subschritt 102g nimmt der Mikrocomputer 5 eine Differenzbildung der gespeicherten Registerwerte vor, wobei jeweils die digitalen Spannungswerte im D-Registen von den digitalen Spannungswerte im D-Register subtrahiert werden. Die jeweilige Lichtschranke ist offen, wenn die Differenz (H-Registerwerte minus D-Registerwerte einen digitalen Wert ergibt, der größer als ein digitaler Schwellwert ist. Anderenfalls ist die Lichtschranke unterbrochen. Der Mikrocomputer 5 detektiert jeden U2-Spannungssprung durch Vergleich von aufeinanderfolgenden Messwerten von demselben optischen Sensor in einem Subschritt 102h.

Die Fig. 7a, 7b und 7c zeigen vereinfachte Geschwindigkeits-/Zeit-Diagramme, welche die unterschiedlichen Abläufe verdeutlichen. Im Regelfall wird die Gewichtsmessung abgeschlossen sein, bevor das flache Gut die zweite Lichtschranke LS2 erreicht. Während für ein zugeführtes kurzes flaches Gut (Standardbrief) ein gültiges Gewichtsmessergebnis in einem Zeitbereich $\Delta t = t2 - t1$ erzielt werden kann, so dass die Transportgeschwindigkeit ohne eine Abstufung aufrecht erhalten werden kann (Fig. 7a), reicht eine kurze Messzeit in den übrigen Fällen (Fig. 7b und 7c) nicht aus und muss verlängert werden.

Das Geschwindigkeits-/Zeit-Diagramm nach Fig. 7b zeigt eine Abstufung der Transportgeschwindigkeit von V1 auf V2, bevor in einem Zeitbereich $\Delta t = t3 - t2$ ein gültiges Gewichtsmessergebnis erzielt werden kann. Anschließend wird die Transportgeschwindigkeit von V2 wieder auf V1 erhöht.

Das Geschwindigkeits-/Zeit-Diagramm nach Fig. 7c zeigt eine Vielzahl von unterschiedlichen und nicht gleichmäßigen Abstufungen der Transportgeschwindigkeit bis zum Anhalten der Transportvorrichtung für flache Güter.

Die Unterprogramme können abweichend von dem vorgeschlagenen Ablauf realisiert werden, um eine Verlängerung der Messzeit durch eine geeignete Abstufung der Transportgeschwindigkeit zu verlängern.

Wenn vorstehend vorn einem Brief oder Standardbrief bzw. von Poststücken gesprochen wird, sollen damit nicht andere flache Güter vom Schutzumfang ausgeschlossen werden.

Wenn im vorstehend beschrieben Ausführungsbeispiel die Sensoren optische Sensoren mit einer Lichtschranke sind, sollen damit nicht andere als taktile Sensoren ausgebildete Sensoren vom Schutzumfang ausgeschlossen werden.

Wenn im vorliegenden Beispiel eine bestimmte Ausführungsform, nämlich bevorzugt ein Verfahren zur Steuerung einer dynamischen Waage nach einer ersten Variante näher erläutert wurde, soll aber dadurch nicht eine andere Ausführungsform nach einer weiteren Variante vom Schutzumfang ausgeschlossen werden, die - vom gleichen Grundgedanken der Erfindung ausgehend - eingesetzt werden kann und von den anliegenden Patentansprüchen umfasst wird.

## Patentansprüche

1. Verfahren zum Steuern einer dynamischen Waage für auf der Seite liegende flache Güter, umfasst ein Steuern des Transports der flachen Güter mit einer fortlaufenden Zählung von Encoderimpulsen und mit einer Gewichtsmessung eines bewegten flachen Gutes, welche gestartet wird, wenn die Hinterkante des flachen Gutes einen ersten Sensor erreicht, mit Speicherung eines ersten Zählstandes W1 eines Zählers, wenn die Vorderkante eines flachen Gutes einen zweiten Sensor erreicht aber kein gültiges Gewichtsmessergebnis vorliegt und mit einem Schritt (111) des Verfahrens, bei welchen eine Gewichtsmessung mit einer stufenweise verringerten Transportgeschwindigkeit erfolgt, wobei nach einer Abstufung der Transportgeschwindigkeit des flachen Gutes eine anschließende Gewichtsmessung mit einer nächst niedrigen Transportgeschwindigkeit vorgenommen wird, wobei dann der aktuelle Zählerstand W abgefragt und gespeichert wird, wenn weder ein gültiges Gewichtsmessergebnis noch festgestellt werden kann, dass die Hinterkante des flachen Gutes den ersten Sensor erreicht, obwohl die Vorderkante eines flachen Gutes einen zweiten Sensor erreicht hat, sowie mit Überprüfung, ob der aktuelle Zählerstand einer Summe aus dem gespeicherten Zählerstand und einem vorbestimmten Zählwert entspricht, und Wiederholung der Abfragen und Subschritte des Schrittes nach der Überprüfung, solange der aktuelle Zählerstand die Summe noch nicht erreicht und mit einer weiteren Abstufung der Transportgeschwindigkeit des flachen Gutes und Gültigkeitsprüfung des Gewichtsmessergebnisses in mindesten einem weiteren Schritt (113, ..., 119), wenn der aktuelle Zählerstand die Summe erreicht.

2. Verfahren, nach Anspruch 1, umfassend folgende Schritte:

   a) Bereitstellen eines Wiegetellers (25), der eine Transportvorrichtung für ein auf der Seite liegend zu transportierendes flaches Gut (G) aufweist, das während des Wiegens in Transportrichtung x eines kartesischen Koordinatensystems transportiert wird, und Bereitstellen eines Encoders (26) und eines Zählers zum Zählen von Encoderimpulsen in Zeitintervallen während des Antriebes der Transportvorrichtung,
   b) Bereitstellen einer Abzugsvorrichtung (28) zum Abziehen des flachen Guts von dem Wiegeteller (25),
   c) Bereitstellen eines ersten Sensors (S1) in einem ersten Abschnitt (I) des Zuführdecks (24) im Einlauf und von Sensoren im Auslauf der dynamischen Waage, zum Erfassen von flachen Gut,
   d) Bereitstellen einer Abdeckung (255) für einen Breitensensor, die zwischen dem Wiegeteller (25) und der Abzugsvorrichtung (28) einen dritten Abschnitt (III) des Zuführdecks (25) bildet, der es gestattet, den Wiegeteller (25) in einem zweiten Abschnitt (II) des Zuführdecks (25) zu verkürzen,

e) Bereitstellen einer Steuereinheit (10, 11) zum Erfassen von Sensorsignalen und Ausgabe von Steuersignalen, vorgesehen zum

i) Erfassen, dass die Vorderkante des flachen Guts eine Position eines ersten Sensor (S1) erreicht, wobei die Position auf einem Transportweg (T) gutstromaufwärts unmittelbar an einer Kante des Wiegetellers (25) liegt,

ii) Erfassen, dass die Hinterkante des flachen Guts die Position des ersten Sensor (S1) erreicht, wobei die Position auf einem Transportweg (T) gutstromaufwärts unmittelbar an einer Kante des Wiegetellers (25) liegt,

iii) Erfassen, dass die Vorderkante des flachen Guts eine Position eines zweiten Sensor (S2) erreicht, wobei die Position auf einem Transportweg (T) gutstromabwärts unmittelbar an einer Kante des Wiegetellers (25) liegt und

iv) Erfassen, dass die Vorderkante des flachen Guts eine Position eines dritten Sensor (S3) erreicht, wobei die Position auf einem Transportweg (T) gutstromabwärts unmittelbar an einer Kante des Wiegetellers (25) liegt sowie

v) Ansteuern eines ersten Motors (256) der Transportvorrichtung, um flaches Gut (G) mit einer ersten Transportgeschwindigkeit V1 entlang des Transportweges (T) zu transportieren, wobei der Betrieb des ersten Motors (256) mit dem Encoder (26) überwacht wird,

vi) Zählen von Encoderimpulsen in Zeitintervallen während des Antriebes der Transportvorrichtung für ein flaches Gut (G),

vii) Wiegen und Auswerten des Gewichtsmessergebnisses, wobei bei einem gültigen Gewichtsmessergebnis der erste Motor (256) der Transportvorrichtung angesteuert wird, um die erste Transportgeschwindigkeit V1 konstant zu halten, wobei bei einem Feststellen eines ungültigen Gewichtsmessergebnis ein erster Zählstand W1 des Zählers gespeichert wird,

viii) Gewichtsmessung bei verringerter Transportgeschwindigkeit bei einem ungültigen Gewichtsmessergebnis, wobei der erste Motor (256) der Transportvorrichtung angesteuert wird, um die erste Transportgeschwindigkeit V1 um mindestens eine Stufe auf mindestens eine zweite Transportgeschwindigkeit V2 zu verringern und um diese anschließend konstant zu halten, und Fortsetzung der Gewichtsmessung des bewegten flachen Guts,

ix) Überprüfen, ob ein gültiges Gewichtsmessergebnis vorliegt, nach dem die Hinterkante des flachen Guts die Position des ersten Sensor (S1) erreicht hat, wobei der aktuelle Zählerstand W des Zählers abgefragt wird, wenn weder ein gültiges Gewichtsmessergebnis vorliegt, noch die Hinterkante des flachen Guts die Position des ersten Sensor (S1) erreicht hat,

x) Ermittlung, ob der aktuelle Zählerstand W des Zählers einer Summe aus dem gespeicherten Zählerstand und einem vorbestimmten Zählwert entspricht, und Wiederholung der Schritte viii) und ix) einer Gewichtsmessung bei einer stufenweise verringerten Transportgeschwindigkeit bei einem ungültigen Gewichtsmessergebnis,

xi) Verringerung der Transportgeschwindigkeit auf null mm/sec und statische Gewichtsmessung, wobei dann eine Fehlermeldung ausgegeben wird, wenn innerhalb eines bestimmten Zeitbereichs kein gültiges Gewichtsmessergebnis vorliegt,

xii) Ansteuern des ersten Motors (256), um das flache Gut mit der ersten Transportgeschwindigkeit V1 in Transportrichtung weiter zu transportieren und überprüfen, ob die Vorderkante des flachen Guts die Position des dritten Sensor (S3) erreicht,

xiii) Aussenden einer Meldung der Steuereinheit der dynamischen Waage (2) über eine Bereitschaft zum Zuführen eines nächsten flachen Guts durch eine vorgelagerte Zuführstation (1) und

xiv) Ansteuern eines zweiten Motors (283) zum Antrieb einer Abzugsrolle (281) der Abzugsvorrichtung (28) zum Abziehen des flachen Guts von dem Wiegeteller (25).

3. Verfahren, nach den Ansprüchen 1 und 2, **gekennzeichnet dadurch, dass** ein Stoppen des Transports erfolgt, wenn während einer Gewichtsmessung bei einer stufenweise verringerten Transportgeschwindigkeit kein gültiges Gewichtsmessergebnis erzielt werden kann.

4. Verfahren, nach den Ansprüchen 1 und 3, **gekennzeichnet dadurch, dass** ein Stoppen des Transports durch ein aktiver Bremsen des ersten Motor (256) vorgenommen wird.

5. Verfahren, nach Anspruch 1, **gekennzeichnet dadurch, dass** die stufenweise verringerte Transportgeschwindigkeit durch eine Drehzahlregelung konstant gehalten wird.

6. Verfahren, nach Anspruch 1, **gekennzeichnet dadurch, dass** eine Anzahl von Stufen vorgesehen ist, um ein "gleichmäßigeres" Abfallen von der Transportgeschwindigkeit zu realisieren, wobei eine abgelegte Hüllkurve eine lineare Funktion aufweist.

7. Verfahren, nach Anspruch 1, **gekennzeichnet dadurch, dass** durch eine entsprechende Abstufung eine nichtlineare Hüllkurve realisiert wird.

8. Verfahren, nach Anspruch 1, **gekennzeichnet dadurch, dass** eine nichtlineare Hüllkurve so realisiert wird, dass die zur Verfügung stehende Messzeit für das Durchlaufen einer Stufe sich nichtlinear von Stufe zu Stufe erhöht.

9. Verfahren, nach Anspruch 1, **gekennzeichnet dadurch, dass** nach dem Ansteuern eines zweiten Motors (283) zum Antrieb einer Abzugsrolle (281) auf den Beginn der Routine (100) zurückverzweigt wird, wenn das Wägen nicht per Befehl gestoppt wird.

10. Anordnung zur Durchführung des Verfahrens zum Steuern einer dynamischen Waage für auf der Seite liegende flache Güter, gemäß Anspruch 1, umfassend Mittel zum Steuern des Transports der flachen Güter, einen Zähler, der mittels Speicherzellen eines Mikrocomputers gebildet wird und einer fortlaufenden Zählung von Encoderimpulsen gestattet und Mittel für eine Gewichtsmessung eines bewegten flachen Gutes, welche gestartet wird, wenn die Hinterkante des flachen Gutes einen ersten Sensor erreicht, mit weiteren Speicherzellen zur Speicherung eines ersten Zählstandes W1 eines Zählers, wenn die Vorderkante eines flachen Gutes einen zweiten Sensor erreicht aber kein gültiges Gewichtsmessergebnis vorliegt und mit einem Schritt (111) des Verfahrens, bei welchem eine Gewichtsmessung mit einer stufenweise verringerten Transportgeschwindigkeit erfolgt, wobei nach einer Abstufung der Transportgeschwindigkeit des flachen Gutes eine anschließende Gewichtsmessung mit einer nächst niedrigen Transportgeschwindigkeit vorgenommen wird, wobei dann der aktuelle Zählerstand W abgefragt wird, wenn weder ein gültiges Gewichtsmessergebnis noch festgestellt werden kann, dass die Hinterkante des flachen Gutes den ersten Sensor erreicht, obwohl die Vorderkante eines flachen Gutes einen zweiten Sensor erreicht hat, sowie mit Überprüfung ob der aktuelle Zählerstand W des Zählers einer Summe aus dem gespeicherten Zählerstand und einem vorbestimmten Zählwert entspricht, und Wiederholung der Abfragen und Subschritte des Schrittes durch den Mikrocomputer, solange der aktuelle Zählerstand W des Zählers einer Summe aus dem gespeicherten Zählerstand und einem vorbestimmten Zählwert einen vorbestimmten Zahlenwert noch nicht erreicht und mit einer weiteren Abstufung der Transportgeschwindigkeit des flachen Gutes und Gültigkeitsprüfung des Gewichtsmessergebnisses in mindesten einem weiteren Schritt (113, ..., 119) des Verfahrens, wenn der aktuelle Zählerstand W des Zählers eine Summe aus dem gespeicherten Zählerstand und einem vorbestimmten Zählwert erreicht.

11. Anordnung nach Anspruch 10, **gekennzeichnet dadurch, dass** die Mittel zum Steuern des Transports und die Mittel für eine Gewichtsmessung einen Wiegeteller (25) und eine Abzugsvorrichtung (28) zum Abziehen des flachen Guts von dem Wiegeteller (25) einschließen, dass der Wiegeteller (25) eine Transportvorrichtung für ein auf der Seite liegend zu transportierendes flaches Gut (G) aufweist, dass die Mittel zum Steuern des Transports einen ersten Sensor (S1) in einem ersten Abschnitt (I) des Zuführdecks (24) im Einlauf und Sensoren im Auslauf der dynamischen Waage, zum Erfassen von flachen Gut und eine Steuereinheit (10, 11) zum Erfassen von Sensorsignalen und Ausgabe von Steuersignalen an die Motoren umfassen, dass eine Abdeckung (255) für einen Breitensensor zwischen dem Wiegeteller (25) und der Abzugsvorrichtung (28) einen dritten Abschnitt des Zuführdecks (25) bildet, der es gestattet, den Wiegeteller (25) in einem zweiten Abschnitt (II) des Zuführdecks (25) zu verkürzen, dass ein Encoder (26) während des Wiegens des in Transportrichtung x eines kartesischen Koordinatensystems transportierten flachen Guts (G) vorgesehen und der Zähler zum Zählen von Encoderimpulsen in Zeitintervallen während des Antriebes der Transportvorrichtung betrieben wird, dass die Steuereinheit (10, 11) zum Erfassen von Sensorsignalen und zur Ausgabe von Steuersignalen vorgesehen ist, um festzustellen,

i) dass die Vorderkante des flachen Guts eine Position eines ersten Sensor (S1) erreicht, wobei die Position auf einem Transportweg (T) gutstromaufwärts unmittelbar an einer Kante des Wiegetellers (25) liegt,
ii) dass die Hinterkante des flachen Guts die Position des ersten Sensor (S1) erreicht, wobei die Position auf einem Transportweg (T) gutstromaufwärts unmittelbar an einer Kante des Wiegetellers (25) liegt,
iii) dass die Vorderkante des flachen Guts eine Position eines zweiten Sensor (S2) erreicht, wobei die Position auf einem Transportweg (T) gutstromabwärts unmittelbar an einer Kante des Wiegetellers (25) liegt und
iv) dass die Vorderkante des flachen Guts eine Position eines dritten Sensor (S3) erreicht, wobei die Position auf einem Transportweg (T) gutstromabwärts unmittelbar an einer Kante des Wiegetellers (25) liegt sowie

v) Ansteuern eines ersten Motors (256) der Transportvorrichtung, um flaches Gut (G) mit einer ersten Transportgeschwindigkeit V1 entlang des Transportweges (T) zu transportieren, wobei der Betrieb des ersten Motors (256) mit dem Encoder (26) überwacht wird,

vi) Zählen von Encoderimpulsen in Zeitintervallen während des Antriebes der Transportvorrichtung für ein flaches Gut (G),

vii) Wiegen und Auswerten des Gewichtsmessergebnisses, wobei bei einem gültigen Gewichtsmessergebnis der erste Motor (256) der Transportvorrichtung angesteuert wird, um die erste Transportgeschwindigkeit V1 konstant zu halten, wobei bei einem Feststellen eines ungültigen Gewichtsmessergebnis ein erster Zählstand W1 des Zählers gespeichert wird,

viii) Gewichtsmessung bei verringerter Transportgeschwindigkeit bei einem ungültigen Gewichtsmessergebnis, wobei der erste Motor (256) der Transportvorrichtung angesteuert wird, um die erste Transportgeschwindigkeit V1 um mindestens eine Stufe auf mindestens eine zweite Transportgeschwindigkeit V2 zu verringern und um diese anschließend konstant zu halten, und Fortsetzung des Gewichtsmessung des bewegten flachen Guts,

ix) Überprüfen, ob ein gültiges Gewichtsmessergebnis vorliegt, nach dem die Hinterkante des flachen Guts die Position des ersten Sensor (S1) erreicht hat, wobei der aktuelle Zählerstand W des Zählers abgefragt wird, wenn weder ein gültiges Gewichtsmessergebnis vorliegt, noch die Hinterkante des flachen Guts die Position des ersten Sensor (S1) erreicht hat,

x) Ermittlung ob der aktuelle Zählerstand W des Zählers einer Summe aus dem gespeicherten Zählerstand und einem vorbestimmten Zählwert entspricht, und Wiederholung der Schritte viii) und ix) einer Gewichtsmessung bei einer stufenweise verringerten Transportgeschwindigkeit bei einem ungültigen Gewichtsmessergebnis,

xi) Verringerung der Transportgeschwindigkeit auf null mm/sec und statische Gewichtsmessung, wobei dann eine Fehlermeldung ausgegeben wird, wenn innerhalb eines bestimmten Zeitbereichs kein gültiges Gewichtsmessergebnis vorliegt,

xii) Ansteuern des ersten Motors (256), um das flache Gut mit der ersten Transportgeschwindigkeit V1 in Transportrichtung weiter zu transportieren und überprüfen, ob die Vorderkante des flachen Guts die Position des dritten Sensor (S3) erreicht,

xiii) Aussenden einer Meldung der Steuereinheit der dynamischen Waage (2) über eine Bereitschaft zum Zuführen eines nächsten flachen Guts durch eine vorgelagerte Zuführstation (1) und

xiv) Ansteuern eines zweiten Motors (283) zum Antrieb einer Abzugsrolle (281) der Abzugsvorrichtung (28) zum Abziehen des flachen Guts von dem Wiegeteller (25).

12. Anordnung, nach Anspruch 11, **gekennzeichnet dadurch, dass** die Abzugsvorrichtung (28) nahe an dem Ausgang der dynamischen Waage angeordnet ist und eine Auswurfrolle (281) aufweist, die durch den zweite Motor (283) antrieben wird, wobei die Systemgeschwindigkeit Vs erreicht wird.

13. Anordnung, nach den Ansprüchen 11 bis 12, **gekennzeichnet dadurch, dass** ein Mittel zur Bestimmung der Länge des flachen Guts und ein Mittel zur Bestimmung der Dicke eines flachen Guts am Eingang der dynamischen Waage vorgesehen sind.

14. Anordnung, nach Anspruch 11, **gekennzeichnet dadurch, dass** die Sensoren (S1, S2, S3) als Einweglichtschranken ausgebildet sind.

15. Anordnung, nach Anspruch 11, **gekennzeichnet dadurch, dass** die Sensoren (S1, S2, S3) als taktile Sensoren ausgebildet sind.

**Claims**

1. Method to control a dynamic scale for flat goods lying on their side, comprises a controlling of the transport of the flat goods with a continuous counting of encoder pulses, and with a weight measurement of a moving flat good which is started when the trailing edge of the flat good reaches a first sensor, with storage of a first count state W1 of a counter if the leading edge of a flat good reaches a second sensor but a valid weight measurement result is not present; and with a step (111) of the method in which a weight measurement takes place with a transport velocity reduced step by step; wherein after a step-down of the transport velocity of the flat good, a subsequent weight measurement is performed with a next lowest transport velocity, wherein the current counter state W is then queried and stored if neither a valid weight measurement result, nor can it be established that the trailing edge of the flat good has reached the first sensor, although the leading edge of a flat good has reached a second sensor; as well as with check as to whether the current counter state corresponds to a sum of the stored counter state and a predetermined count value; and repetition of the querying and sub-steps of the step after the check as long as the current counter state has not yet reached the sum; and with an additional step-down of the transport velocity of the flat good and validity check of the weight measurement result in at least one additional step (113, ..., 119) if the current counter state reaches the sum.

2. Method according to claim 1, comprising the following steps:

a) provide a weighing plate (25) that has a transport device for a flat good (G) transported lying on its side, which flat good (G) is transported in the transport direction x of a Cartesian coordinate system during the weighing, and provide an encoder (26) and a counter to count encoder pulses in time intervals during the driving of the transport direction,

b) provide a takeoff device (28) to take the flat good off of the weighing plate (25),

c) provide a first sensor (S1) in a first section (I) of the supply deck (24) in the intake, and sensors in the outlet of the dynamic scale, to detect flat good,

d) provide a covering (255) for a width sensor that forms a third section (III) of the supply deck (25) between the weighing plate (25) and the takeoff device (28), which third section (III) allows the weighing plate (25) to be shortened in a second section (II) of the supply deck (25),

e) provide a control unit (10, 11) to detect sensor signals and output control signals, provided to

i) detect that the leading edge of the flat good has reached a position of a first sensor (S1), wherein the position lies directly at an edge of the weighing plate (25), upstream in terms of the flow of goods in a transport path (T),

ii) detect that the trailing edge of the flat good has reached a position of a first sensor (S1), wherein the position lies directly at an edge of the weighing plate (25), upstream in terms of the flow of goods in a transport path (T),

iii) detect that the leading edge of the flat good has reached a position of a second sensor (S2), wherein the position lies directly at an edge of the weighing plate (25), downstream in terms of the flow of goods in a transport path (T),

iv) detect that the leading edge of the flat good has reached a position of a third sensor (S3), wherein the position lies directly at an edge of the weighing plate (25), downstream in terms of the flow of goods in a transport path (T), and

v) activate a first motor (256) of the transport device in order to transport [the] flat good (G) along the transport path (T) with a first transport velocity V1, wherein the operation of the first motor (256) is monitored with the encoder (26),

vi) count encoder pulses at time intervals during the driving of the transport device for a flat good (G),

vii) weigh and evaluate the weight measurement result, wherein given a valid weight measurement result the first motor (256) of the transport device is activated in order to keep the first transport velocity V1 constant, wherein a first count state W1 of the counter is stored upon determining an invalid weight measurement result,

viii) weight measurement at reduced transport velocity given an invalid weight measurement result, wherein the first motor (256) of the transport device is activated in order to reduce the first transport velocity V1 by at least one step to at least a second transport velocity V2, and in order to subsequently hold this constant, and continuation of the weight measurement of the moving flat good,

ix) check whether a valid weight measurement result is present after the trailing edge of the flat good has reached the position of the first sensor (S1), wherein the current counter state W of the counter is queried if neither a valid weight measurement result is present nor has the trailing edge of the flat good reached the position of the first sensor (S1),

x) determine whether the current counter state W of the counter corresponds to a sum of the stored counter state and a predetermined count value, and repeat steps viii) and ix) of a weight measurement given a transport velocity reduced step-by-step given an invalid weight measurement result,

xi) reduce the transport velocity to zero mm/sec, and static weight measurement, wherein then an error message is output if no valid weight measurement result is present within a defined time period,

xii) activate the first motor (256) in order to transport the flat good further in the transport direction at the first transport velocity V1, and check whether the leading edge of the flat good has reached the position of the third sensor (S3),

xiii) send out a message of the control unit of the dynamic scale (2) about a readiness for the supply of a next flat good via an upstream supply station (1), and

xiv) activate a second motor (283) to drive a takeoff roller (281) of the takeoff device (28) to take a flat good off of the weighing plate (25).

3. Method according to claims 1 and 2, **characterized in that** a stopping of the transport takes place if no valid weight measurement result may be achieved during a weight measurement given a transport velocity reduced step by step.

4. Method according to claims 1 and 3, **characterized in that** a stopping of the transport is performed via an active braking of the first motor (256).

5. Method according to claim 1, **characterized in that** the transport velocity reduced step by step is held constant via a rotation speed regulation.

6. Method according to claim 1, **characterized in that** a number of steps are provided in order to realize a "more uniform" decrease of the transport velocity, wherein a placed envelope curve has a linear function.

7. Method according to claim 1, **characterized in that** a nonlinear envelope curve is realized via a corresponding gradation.

8. Method according to claim 1, **characterized in that** a nonlinear envelope curve is realized so that the available measurement time for the traversal of a step increases nonlinearly from step to step.

9. Method according to claim 1, **characterized in that**, if the weighing is not stopped by command, the workflow branches back to the beginning of the routine (100) after the activation of a second motor (283) to drive a takeoff roller (281).

10. Arrangement to implement the method for controlling a dynamic scale for flat goods lying on their side, according to claim 1, comprising means for controlling the transport of the flat good; a counter that is formed by means of memory cells of a microcomputer and allows a continuous counting of encoder pulses, and means for a weight measurement of a moving flat good which is started if the trailing edge of the flat good reaches a first sensor, with additional memory cells for storing a first count state W1 of a counter if the leading edge of a flat good has reached a second sensor, but no valid weight measurement result is present; and with a step (111) of the method in which a weight measurement takes place with a transport velocity reduced step by step, wherein after a gradation of the transport velocity of the flat good a subsequent weight measurement is performed with a next lowest transport velocity, wherein then the current counter state W is queried if neither a valid weight measurement result, nor may it be established that the trailing edge of the flat good has reached the first sensor, although the leading edge of a flat good has reached a second sensor, and with a check as to whether the current counter state W of the counter corresponds to a sum of the stored counter state and a predetermined count value, and repetition of the queries and sub-steps of the step by the microcomputer as long as the current counter state W of the counter of a sum of the stored counter state and a predetermined count value has not yet reached a predetermined numerical value, and with an additional gradation of the transport velocity of the flat good and validity check of the weight measurement result in at least one additional step (113, ..., 119) of the method if the current counter state W of the counter has reached a sum of the stored counter state and a predetermined count value.

11. Arrangement according to claim 10, **characterized in that** the means for controlling the transport and the means for a weight measurement include a weighing plate (25) and a takeoff device (28) to take the flat good off of the weighing plate (25); **in that** the weighing plate (25) has a transport device for a flat good (G) to be transported lying on its side, **in that** the means for controlling the transport comprise a first sensor (S1) in a first section (I) of the supply deck (24), at the intake, and sensors at the outlet of the dynamic scale to detect [the] flat good, and a control unit (10, 11) to detect sensor signals and output control signals to the motors, **in that** a covering (255) for a width sensor forms a third section of the supply cover (25) between the weighing plate (25) and the takeoff device (28), which third segment allows the weighing plate (25) to be shortened in a second section (II) of the supply cover (25); **in that** an encoder (26) is provided during the weighing of the flat good (G) transported in the transport device x of a Cartesian coordinate system, and the counter is operated to count encoder pulses in time intervals during the driving of the transport device; **in that** the control unit (10, 11) is provided to detect sensor signals and to output control signals, in order to establish

    i) that the leading edge of the flat good has reached a position of a first sensor (S1), wherein the position lies directly at an edge of the weighing plate (25), upstream in terms of the flow of goods in a transport path (T),
    ii) that the trailing edge of the flat good has reached a position of the first sensor (S1), wherein the position lies directly at an edge of the weighing plate (25), upstream in terms of the flow of goods in a transport path (T),

iii) that the leading edge of the flat good has reached a position of a second sensor (S2), wherein the position lies directly at an edge of the weighing plate (25), downstream in terms of the flow of goods in a transport path (T),

iv) that the leading edge of the flat good has reached a position of a third sensor (S3), wherein the position lies directly at an edge of the weighing plate (25), downstream in terms of the flow of goods in a transport path (T), and

v) activate of a first motor (256) of the transport device in order to transport flat good (G) along the transport path (T) with a first transport velocity V1, wherein the operation of the first motor (256) is monitored with the encoder (26),

vi) count encoder pulses at time intervals during the driving of the transport device for a flat good (G),

vii) weigh and evaluate the weight measurement result, wherein given a valid weight measurement result the first motor (256) of the transport device is activated in order to keep the first transport velocity V1 constant, wherein a first count state W1 of the counter is stored upon determining an invalid weight measurement result,

viii) weight measurement at reduced transport velocity given an invalid weight measurement result, wherein the first motor (256) of the transport device is activated in order to reduce the first transport velocity V1 by at least one step to at least a second transport velocity V2, and in order to subsequently hold this constant, and continuation of the weight measurement of the moving flat good,

ix) check whether a valid weight measurement result is present after the trailing edge of the flat good has reached the position of the first sensor (S1), wherein the current counter state W of the counter is queried if neither a valid weight measurement result is present nor has the trailing edge of the flat good reached the position of the first sensor (S1),

x) determine whether the current counter state W of the counter corresponds to a sum of the stored first counter state and a predetermined count value, and repeat steps viii) and ix) of a weight measurement given a transport velocity reduced step-by-step given an invalid weight measurement result,

xi) reduce the transport velocity to zero mm/sec, and static weight measurement, wherein then an error message is output if no valid weight measurement result is present within a defined time period,

xii) activate the first motor (256) in order to transport the flat good further in the transport direction at the first transport velocity V1, and check whether the leading edge of the flat good has reached the position of the third sensor (S3),

xiii) send out a message to the control unit of the dynamic scale (2) about a readiness for the supply of a next flat good via an upstream supply station (1), and

xiv) activate a second motor (283) to drive a takeoff roller (281) of the takeoff device (28) to take a flat good off of the weighing plate (25).

12. Arrangement according to claim 11, **characterized in that** the takeoff device (28) is arranged close to the output of the dynamic scale, and has an ejection roller (281) that is driven by the second motor (283), wherein the system velocity Vs is achieved.

13. Arrangement according to claims 11 through 12, **characterized in that** a means for determining the length of the flat good and a means for determining the thickness of a flat good are provided at the input of the dynamic scale.

14. Arrangement according to claim 11, **characterized in that** the sensors (S1, S2, S3) are designed as one-way photoelectric barriers.

15. Arrangement according to claim 11, **characterized in that** the sensors (S1, S2, S3) are designed as tactile sensors.

**Revendications**

1. Procédé, destiné à commander une balance dynamique pour des produits plats posés sur le flan, qui comporte une commande du transport des produits plats, accompagnée d'un comptage permanent d'impulsions d'un encodeur et qui comporte une mesure du poids d'un produit plat déplacé, lequel est démarré lorsque l'arête postérieure du produit plat atteint un premier capteur, qui comporte une mémorisation d'un premier chiffre de compteur W1 d'un compteur, lorsque l'arête antérieure d'un produit plat atteint un deuxième capteur, mais qu'on n'est en présence d'aucun résultat de mesure pondérale valable, et qui comporte une étape (111) du procédé lors de laquelle il s'effectue une mesure du poids à une vitesse de transport graduellement réduite, lors duquel, après une gradation de la vitesse de transport du produit plat, il est procédé à une mesure du poids consécutive à une vitesse de transport inférieure la plus proche, le chiffre actuel de comptage W étant alors interrogé et mémorisé s'il ne peut être constaté ni un résultat de mesure pondérale valable, ni que l'arête postérieure du produit plat atteint le premier capteur, bien que l'arête antérieure d'un produit plat ait atteint un deuxième capteur, et comportant une vérification si le chiffre actuel du compteur correspond à une somme du chiffre mémorisé du compteur et d'une valeur de comptage prédéfinie et une réitération des interrogations et sous-étapes de l'étape après vérification, aussi longtemps que le chiffre actuel du compteur n'a pas encore atteint la somme et qui comporte une gradation supplémentaire de la vitesse de transport du produit plat et une vérification de la validité du résultat de mesure pondérale au cours d'au moins une étape supplémentaire (113, ..., 119), lorsque le chiffre actuel du compteur atteint la somme.

2. Procédé, selon la revendication 1, comprenant les étapes suivantes, consistant à :

a) mettre à disposition un plateau de pesée (25) qui comporte un dispositif de transport d'un produit plat (G) à transporter, couché sur le flan, qui pendant la pesée est transporté dans la direction de transport x d'un système de coordonnées cartésien et mettre à disposition un encodeur (26) et un compteur destiné à compter des impulsions de l'encodeur à des intervalles de temps pendant l'entraînement du dispositif de transport,
b) mettre à disposition un dispositif de retrait (28) destiné à retirer le produit plat du plateau de pesée (25),
c) mettre à disposition un premier capteur (S1) dans un premier segment (I) du pont d'amenage (24) à l'entrée et de capteurs à la sortie de la balance dynamique, pour détecter du produit plat,
d) mettre à disposition un recouvrement (255) pour un capteur de largeur, qui entre le plateau de pesée (25) et le dispositif de retrait (28) forme un troisième segment (III) du pont d'amenage (25) qui permet un raccourcissement du pont d'amenage (25) dans un deuxième segment (II)
e) mettre à disposition une unité de commande (10, 11), destinée à détecter des signaux de capteurs et à délivrer signaux de commande, prévue pour

i) détecter que l'arête antérieure du produit plat atteint une position d'un premier capteur (S1), la position se situant sur une trajectoire de transport (T) en amont du flux de produits, directement sur une arête du plateau de pesée (25),
ii) détecter que l'arête postérieure du produit plat atteint la position du premier capteur (S1), la position se situant sur une trajectoire de transport (T) en amont du flux de produits, directement sur une arête du plateau de pesée (25),
iii) détecter que l'arête antérieure du produit plat atteint une position d'un deuxième capteur (S2), la position se situant sur une trajectoire de transport (T) en aval du flux de produits, directement sur une arête du plateau de pesée (25) et
iv) détecter que l'arête antérieure du produit plat atteint une position d'un troisième capteur (S3), la position se situant sur une trajectoire de transport (T) en aval du flux de produits, directement sur une arête du plateau de pesée (25), ainsi que pour

v) actionner un premier moteur (256) du dispositif de transport, pour transporter du produit plat (G) à une première vitesse de transport V1, le long de la trajectoire de transport (T), le fonctionnement du premier moteur (256) étant supervisé par l'encodeur (26),
vi) compter des impulsions de l'encodeur dans des intervalles de temps pendant l'entraînement du dispositif de transport pour un produit plat (G),
vii) peser et évaluer le résultat de mesure pondérale, si le résultat de mesure pondérale est valable, le premier moteur (256) du dispositif de transport étant actionné, pour garder constante la première vitesse de transport V1, lors d'une constatation d'un résultat de mesure pondérale non valable, un premier chiffre de compteur W1 du compteur étant mémorisé,
viii) mesurer le poids à vitesse de transport réduite, dans le cas d'un résultat de mesure pondérale non valable, le premier moteur (256) du dispositif de transport étant actionné pour réduire la première vitesse de transport V1 d'au moins un grade, à au moins une deuxième vitesse de transport V2 et pour ensuite la garder constante, et poursuivre la mesure du poids du produit plat déplacé,
ix) vérifier si on est en présence d'un résultat de mesure pondérale valable, une fois que l'arête postérieure du produit plat a atteint la position du premier capteur (S1), le chiffre actuel de comptage W du compteur étant interrogé si on n'est pas en présence d'un résultat de mesure pondérale valable, et si l'arête postérieure du produit plat n'a pas non plus atteint la position du premier capteur (S1),
x) déterminer si le chiffre actuel de comptage W du compteur correspond à une somme du chiffre de comptage mémorisé et d'une valeur de comptage prédéfinie, et réitération des étapes viii) et ix) d'une mesure du poids à une vitesse de transport graduellement réduite si le résultat de mesure pondérale n'est pas valable,
xi) réduire la vitesse de transport à zéro mm/seconde et procéder à une mesure de poids statique, un message d'erreur étant édité si dans une période définie, on n'est en présence d'aucun résultat de mesure pondérale valable,

xii) actionner le premier moteur (256), pour continuer de transporter le produit plat à la première vitesse de transport V1 dans la direction de transport et vérifier si l'arête antérieure du produit plat atteint la position du troisième capteur (S3),

xiii) émettre un message de l'unité de commande de la balance dynamique (2) sur la disponibilité pour amener un prochain produit plat par un poste d'amenage (1) placé en amont et

xiv) actionner un premier moteur (283) pour entraîner un cylindre de retrait (281) du dispositif de retrait (28), destiné à retirer le produit plat du plateau de pesée (25).

3. Procédé, selon les revendications 1 et 2, **caractérisé en ce que** le transport est mis à l'arrêt si pendant une mesure du poids à une vitesse de transport graduellement réduite, il n'est pas possible d'obtenir un résultat de mesure pondérale valable.

4. Procédé, selon les revendications 1 et 3, **caractérisé en ce qu'**il est procédé à une mise à l'arrêt du transport par un freinage actif du premier moteur (256).

5. Procédé, selon la revendication 1, **caractérisé en ce que** la vitesse de transport graduellement réduite est gardée constante par une régulation du régime.

6. Procédé, selon la revendication 1, **caractérisé en ce qu'**il est prévu un nombre de grades, pour réaliser une décroissance « plus régulière » de la vitesse de transport, une courbe enveloppe sauvegardée comportant une fonction linéaire.

7. Procédé, selon la revendication 1, **caractérisé en ce qu'**une courbe d'enveloppe non linéaire est réalisée par une gradation correspondante.

8. Procédé, selon la revendication 1, **caractérisé en ce qu'**une courbe d'enveloppe non linéaire est réalisée de telle sorte que le temps de mesure disponible pour le passage d'un grade augmente de manière non linéaire de grade en grade.

9. Procédé, selon la revendication 1, **caractérisé en ce que** qu'après l'actionnement d'un deuxième moteur (283) pour entraîner un cylindre de retrait (281), il s'effectue un retour au début de la routine (100) si la pesée n'est pas stoppée par une instruction.

10. Agencement, destiné à réaliser le procédé de commande d'une balance dynamique pour des produits plats couchés sur le flan selon la revendication 1, comprenant des moyens pour la commande du transport des produits plats, un compteur qui est formé par des cellules de mémoire d'un micro-ordinateur et qui admet un comptage permanent d'impulsions de l'encodeur et des moyens pour procéder à une mesure du poids d'un produit plat déplacé, laquelle démarre lorsque l'arête postérieure du produit plat atteint un premier capteur, comportant des cellules de mémoire supplémentaires, destinées à mémoriser un premier chiffre de comptage W1 d'un compteur lorsque l'arête antérieure d'un produit plat atteint un deuxième capteur, mais qu'on n'est en présence d'aucun résultat de mesure pondérale valable et comportant une étape (111) du procédé lors de laquelle il s'effectue une mesure du poids à une vitesse de transport graduellement réduite, lors de laquelle, après une gradation de la vitesse de transport du produit plat, il est procédé à une mesure du poids consécutive, à une vitesse de transport immédiatement inférieure, le chiffre actuel de comptage W étant interrogé si on ne peut constater ni résultat de mesure pondérale valable, ni que l'arête postérieure du produit plat atteint le premier capteur, bien que l'arête antérieure d'un produit plat ait atteint un deuxième capteur et comportant la vérification si le chiffre actuel de comptage W du compteur correspond à une somme du chiffre de comptage mémorisé et d'une valeur de comptage prédéfinie, et réitération de l'interrogation et des sous-étapes de l'étape par le micro-ordinateur aussi longtemps que le chiffre actuel de comptage W du compteur, d'une somme du chiffre de comptage mémorisé et d'une valeur de comptage prédéfinie n'a pas encore atteint une valeur de comptage prédéfinie et comportant une gradation supplémentaire de la de vitesse de transport du produit plat et une vérification de la validité du résultat de mesure pondérale dans au moins une étape supplémentaire (113, ..., 119) du procédé, lorsque le chiffre actuel de comptage W du compteur atteint une somme du chiffre de comptage mémorisé et d'une valeur de comptage mémorisée.

11. Agencement selon la revendication 10, **caractérisé en ce que** les moyens de commande du transport et les moyens pour une mesure du poids englobent un plateau de pesée (25) et un dispositif de retrait (28), destiné à retirer le produit plat du plateau de pesée (25), **en ce que** le plateau de pesée (25) comporte un dispositif de transport d'un produit plat (G) à transporter, couché sur le flanc, **en ce que** les moyens de commande du transport comprennent

22

un premier capteur (S1) dans un premier segment (I) du pont d'amenage (24), à l'entrée et des capteurs à la sortie de la balance dynamique, pour détecter du produit plat et une unité de commande (10, 11) pour détecter des signaux de capteurs et pour délivrer des signaux de commande aux moteurs, **en ce qu'**un recouvrement (255) d'un capteur de largeur entre le plateau de pesée (25) et le dispositif de retrait (28) forme un troisième segment du pont d'amenage (25) qui permet de raccourcir le plateau de pesée (25) dans un deuxième segment (II) du pont d'amenage (25), **en ce qu'**il est prévu un encodeur (26) pendant la pesée du produit plat (G) transporté dans la direction de transport x d'un système de coordonnées cartésien et **en ce que** le compteur destiné à compter des impulsions de l'encodeur à des intervalles de temps fonctionne pendant l'entraînement du dispositif de transport, **en ce que** l'unité de commande (10, 11) est prévue pour détecter des signaux de capteurs et pour délivrer des signaux de commande, pour constater

i) que l'arête antérieure du produit plat atteint une position d'un premier capteur (S1), la position se situant sur une trajectoire de transport (T) en amont du flux de produits, directement sur une arête du plateau de pesée (25),

ii) que l'arête postérieure du produit plat atteint la position du premier capteur (S1) se situant sur une trajectoire de transport (T) en amont du flux de produits, directement sur une arête du plateau de pesée (25),

iii) que l'arête antérieure du produit plat atteint une position d'un deuxième capteur (S2), se situant sur une trajectoire de transport (T) en aval du flux de produits, directement sur une arête du plateau de pesée (25), et

iv) que l'arête antérieure du produit plat atteint une position d'un troisième capteur (S3), se situant sur une trajectoire de transport (T) en aval du flux de produits, directement sur une arête du plateau de pesée (25) ainsi que pour

v) actionner un premier moteur (256) du dispositif de transport, pour transporter du produit plat (G) à une première vitesse de transport V1 le long de la trajectoire de transport (T), le fonctionnement du premier moteur (256) étant supervisé par l'encodeur (26),

vi) compter des impulsions de l'encodeur dans des intervalles de temps pendant l'entraînement du dispositif de transport pour un produit plat (G),

vii) peser et évaluer le résultat de mesure pondérale, lorsque le résultat de mesure pondérale est valable, le premier moteur (256) du dispositif de transport étant actionné, pour garder constante la première vitesse de transport V1, si un résultat de mesure pondérale non valable est constaté, un premier chiffre de comptage W1 du compteur étant mémorisé,

viii) mesurer le poids à une vitesse de transport réduite si le résultat de mesure pondérale n'est pas valable, le premier moteur (256) du dispositif de transport étant actionné pour réduire la première vitesse de transport V1 d'au moins un grade à au moins une deuxième vitesse de transport V2 et pour la garder constante, et poursuivre la mesure du poids du produit plat déplacé,

ix) vérifier si on est en présence d'un résultat de mesure pondérale valable, une fois que l'arête postérieure du produit plat a atteint la position du premier capteur (S1), le chiffre actuel de comptage W du compteur étant interrogé si l'on n'est pas en présence d'un résultat de mesure pondérale valable et si l'arête postérieure du produit plat n'a pas atteint la position du premier capteur (S1),

x) déterminer si le chiffre actuel de comptage W du compteur correspond à une somme du chiffre de comptage mémorisé et d'une valeur de comptage prédéfinie, et réitération des étapes viii) et ix) d'une mesure du poids à une vitesse de transport graduellement réduite si le résultat de mesure pondérale n'est pas valable,

xi) réduire la vitesse de transport à zéro mm/seconde et procéder à une mesure de poids statique, un message d'erreur étant édité si dans une période définie, on n'est en présence d'aucun résultat de mesure pondérale valable,

xii) actionner le premier moteur (256), pour continuer à transporter le produit plat à la première vitesse de transport V1 dans la direction de transport et vérifier si l'arête antérieure du produit plat atteint la position du troisième capteur (S3),

xiii) émettre un message de l'unité de commande de la balance dynamique (2) concernant une disponibilité à amener un produit plat suivant par un poste d'amenage (1) placé en amont et

xiv) actionner un deuxième moteur (283), pour entraîner un cylindre de retrait (281) du dispositif de retrait (28) pour retirer le produit plat du plateau de pesée (25).

**12.** Agencement, selon la revendication 11, **caractérisé en ce que** le dispositif de retrait (28) est placé à proximité de la sortie de la balance dynamique et comporte un cylindre d'expulsion (281) qui est entraîné par le deuxième moteur (283), la vitesse de système Vs étant atteinte.

**13.** Agencement, selon les revendications 11 ou 12, **caractérisé en ce qu'**un moyen destiné à déterminer la longueur du produit plat et un moyen destiné à déterminer l'épaisseur d'un produit plat à l'entrée de la balance dynamique sont prévus.

14. Agencement, selon la revendication 11, **caractérisé en ce que** les capteurs (S1, S2, S3) sont conçus sous la forme d'une barrière photo-électrique unidirectionnelle.

15. Agencement, selon la revendication 11, **caractérisé en ce que** les capteurs (S1, S2, S3) sont conçus sous la forme de capteurs tactiles.

Fig. 1

Fig. 2

Fig. 3

Fig. 4a

101 — Start    100

102

Start des Antriebs der Transportvorrichtung mit Zählen von Encoder-impulsen in Intervallen während des Antriebs und Regelung V1 = konst.

103    j    n

Die Vorderkante eines flachen Guts G1 schließt LS1?

Dimensionsmessungen mittels Sensoren der dyn. Waage — 104

105    n

Die Hinterkante des flachen Guts G1 öffnet LS1 ?

j

Start eines dynamischen Wägevorgangs — 106

107    n

Die Vorderkante des flachen Guts G1 schließt LS2?

108    j

Gewichtsmessergebnis gültig ?

109    j    n

Speichere den Zählstand W1 des Zählers für Impulse des Encoders 26

110    a

Gewichtsmessung bei stufenweise verringerter Transportgeschwindigkeit

111 - 120

Gewichtsmessergebnis gültig ?

c    j    b    n

Bremsen bis zum Stop des flachen Guts G1 (Transport-geschwindigkeit VT = 0) und Bestimmen des Gewichts,    121

123

122    n

Liegt innerhalb eines bestimmten Zeitbereichs ein gültiges Gewichtsmessergebnis vor?    Ausgabe einer Fehlermeldung

j

124    Ansteuern des ersten Motors 256  und Regeln V1 = konst.

125

n

Die Vorderkante des flachen Guts G1 schließt LS3 ?

j

d

Fig. 5a

d ◆

| Bereitschaft zum Zuführen eines nächsten flachen Guts G2 melden! | —126 |

| Ansteuerung des zweiten Motors 283 mit Zählen von Impulsen des Encoders 287 in Intervallen und Regelung auf eine vorbestimmte Transportgeschwindigkeit Vs = konst. der Abzugsvorrichtung 28, | —127 |

w ◆ ← n ⟨ Wägen stoppen? ⟩ — 128

j

| Beendigung des dynamischen Wägevorgangs und Rückstellung des Zählers | — 129 |

Fig. 5b

Fig. 6

110

a

111

Weitertransport mit V2 = konst. & dynamisch Wägen des Guts — 1111

1112

Die Hinterkante des flachen Guts G1 öffnet LS1 ?    n

1115

1114

1113    j    Gewichtsmess-ergebnisabfrage

j    Ergebnis gültig?    Zählerstand W abfragen

n

112    W = W1 + W3 ?    n

j

113

gültig    Weitertransport mit V3 = konst. & dynamisch Wägen des Guts mit Bestimmen des Gewichts, Gültigkeitsprüfung des Gewichtsmess-ergebnisses sowie Zählerstand W abfragen.

n

114    W = W1 + W4 ?    n

j

115

gültig    Weitertransport mit V4 = konst. & dynamisch Wägen des Guts mit Bestimmen des Gewichts, Gültigkeitsprüfung des Gewichtsmess-ergebnisses sowie Zählerstand W abfragen.

116    W = W1 + W5 ?    n

j

119

gültig    Weitertransport mit einer weiteren Transportgeschwindigkeit Vn = konst. (Vn < Vn-1), Bestimmen des Gewichts, Gültigkeitsprüfung des Gewichtsmessergebnisses sowie Zählerstand W abfragen.

n

120    W = W1 + Wn ?

j

c    b

Fig. 5c

VT    V1

0 t1 t2 t3 tn tn+1 t

Fig. 7a

VT    V1    V2

0 t1 t2 t3 tn tn+1 t

Fig. 7b

VT    V1    V2

0 t1 t2 t3 t4 tn tn+1 t

Fig. 7c

Fig. 4b

| | |
|---|---|
| Die Fototransistoren FT aller optischen Sensoren messen Umgebungslicht | 102a |
| zyklische Abfrage d. Spannung *u11* an Re durch MUX (u. alle Sensoren) | 102b |
| Analog/Digital-Umsetzung zu U11 und Messwert-Speicherung im D-Register | 102c |
| Anschaltung einer Konstantstromquelle an eine erste LED1, usw. | 102d |
| FT1 detektiert Umgebungslicht + LED1 (zyklische Abfrage) → Spannung *u21* | 102e |
| Analog/Digital-Umsetzung zu U21 und Messwert-Speicherung im H-Register | 102f |
| Differenzbildung im µC der gespeicherten Registerwerte H - D > Schwellwert? Ja → Lichtschranke offen, Nein → Lichtschranke unterbrochen | 102g 102h |
| Der Mikrocomputer µC detektiert jeden U2-Spannungssprung durch Vergleich von aufeinanderfolgenden Messwerten von demselben optischen Sensor. | |

Fig. 5d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 974819 B1
- EP 1014050 B1
- EP 1014051 B1
- EP 1189041 B1
- EP 1116941 B1
- DE 102011100176 B4
- DE 102010009431 A1